(19) Europäisches Patentamt
European Patent Office
Office européen des brevets

(11) **EP 4 318 313 A1**

(12) **EUROPEAN PATENT APPLICATION**
published in accordance with Art. 153(4) EPC

(43) Date of publication:
**07.02.2024 Bulletin 2024/06**

(21) Application number: **22836864.3**

(22) Date of filing: **04.07.2022**

(51) International Patent Classification (IPC):
**G06N 3/04** (2023.01)   **G06N 3/063** (2023.01)

(52) Cooperative Patent Classification (CPC):
**G06N 3/04; G06N 3/063; G06V 10/774;
G06V 10/82; G06V 20/52**

(86) International application number:
**PCT/CN2022/103691**

(87) International publication number:
**WO 2023/280113 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.07.2021 CN 202110771795**

(71) Applicant: **Huawei Technologies Co., Ltd.
Longgang
Shenzhen, Guangdong 518129 (CN)**

(72) Inventors:
• ZHOU, Yucong
  Shenzhen, Guangdong 518129 (CN)
• ZHONG, Zhao
  Shenzhen, Guangdong 518129 (CN)
• XIAO, Yannan
  Shenzhen, Guangdong 518129 (CN)
• LIU, Genshu
  Shenzhen, Guangdong 518129 (CN)

(74) Representative: **Goddar, Heinz J.
Boehmert & Boehmert
Anwaltspartnerschaft mbB
Pettenkoferstrasse 22
80336 München (DE)**

(54) **DATA PROCESSING METHOD, TRAINING METHOD FOR NEURAL NETWORK MODEL, AND APPARATUS**

(57)   This application discloses a data processing method, and a neural network model training method and apparatus in the field of artificial intelligence. The data processing method includes: processing to-be-processed data by using a target neural network quantization model, where the target neural network quantization model includes a plurality of groups of fusion parameters, the target neural network quantization model is obtained by quantizing a target neural network model, an activation function of the target neural network model includes a piecewise linear function PWL, the PWL includes a plurality of intervals, and there is a correspondence between the plurality of groups of fusion parameters and the plurality of intervals. According to the method in this application, a model that uses the PWL as an activation function can be quantized, thereby improving an inference speed of the model.

1200

Obtain to-be-processed data, where the to-be-processed data includes image data, audio data, or text data — S1210

Process the to-be-processed data by using a target neural network quantization model, where the target neural network quantization model includes a plurality of groups of fusion parameters, the target neural network quantization model is obtained by quantizing a target neural network model, an activation function of the target neural network model includes a PWL, the PWL includes a plurality of intervals, and there is a correspondence between the plurality of groups of fusion parameters and the plurality of intervals — S1220

FIG. 12

EP 4 318 313 A1

## Description

This application claims priority to Chinese Patent Application No. 202110771795.6, filed with the China National Intellectual Property Administration on July 8, 2021 and entitled "DATA PROCESSING METHOD, AND NEURAL NETWORK MODEL TRAINING METHOD AND APPARATUS", which is incorporated herein by reference in its entirety.

## TECHNICAL FIELD

This application relates to the field of artificial intelligence, and more specifically, to a data processing method, and a neural network model training method and apparatus.

## BACKGROUND

Artificial intelligence (artificial intelligence, AI) refers to a theory, method, technology, and application system that are used to simulate, extend, and expand human intelligence by using a digital computer or a machine controlled by a digital computer, to perceive an environment, obtain knowledge, and obtain an optimal result by using the knowledge. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perception, inference, and decision-making functions. Research in the field of artificial intelligence includes robotics, natural language processing, computer vision, decision-making and inference, human-machine interaction, recommendation and search, AI basic theories, and the like.

A deep neural network is a feedforward neural network with a deep structure, and is one of representative algorithms of deep learning. The deep neural network has a powerful feature expression capability, and is widely used in processing and analyzing a plurality of media signals such as an image, a video, and a voice. An activation function is an important part of the deep neural network. The activation function is usually placed after a convolution layer or a fully-connected layer, to introduce a non-linear operation for the deep neural network, so that the deep neural network can better fit a non-linear function, and resolve a complex problem in a real world.

A rectifier linear unit (rectifier linear unit, ReLU) activation function is one of widely used activation functions in the deep neural network. However, after ReLU processing is performed on an input feature whose value is less than 0, an output of the input feature is constantly 0. As a result, some neurons are no longer activated, and corresponding parameters cannot be updated, affecting performance of the model. However, when a piecewise linear function (piecewise linear function, PWL) is used as the activation function, a plurality of function forms may be fitted by adjusting a plurality of trainable parameters of the PWL. This helps obtain a better activation function and improve performance of the model.

With the development of the deep neural network, a quantity of parameters of the network model increases accordingly, and a large quantity of computing resources and memory are occupied. Model quantization can reduce memory occupied by the model, improve inference efficiency of the deep neural network, and reduce power consumption. However, an existing model quantization method is usually designed for the ReLU activation function. For a model that uses the PWL as the activation function, the existing model quantization method cannot directly quantize the parameter of the PWL. As a result, the model cannot implement quantization inference, and an inference speed of the model is affected.

Therefore, how to improve processing efficiency of a neural network model in which the PWL is used as the activation function becomes an urgent problem to be resolved.

## SUMMARY

This application provides a data processing method, and a neural network model training method and apparatus, to quantize a model that uses a PWL as an activation function, and improve an inference speed of the model.

According to a first aspect, a data processing method is provided. The method includes: obtaining to-be-processed data, where the data includes image data, audio data, or text data; and processing the to-be-processed data by using a target neural network quantization model, where the target neural network quantization model includes a plurality of groups of fusion parameters, the target neural network quantization model is obtained by quantizing a target neural network model, an activation function of the target neural network model includes a PWL, the PWL includes a plurality of intervals, and there is a correspondence between the plurality of groups of fusion parameters and the plurality of intervals.

In an existing solution, only a weight parameter in a model in which the PWL is used as the activation function can be quantized, and a parameter of the PWL cannot be quantized. In this way, in an inference process, calculation of the activation function needs to be performed based on the parameter of the PWL. In other words, the existing solution cannot implement full-process quantization inference. According to the solution in this embodiment of this application, the target neural network quantization model may process data based on the plurality of groups of fusion parameters corresponding to the plurality of intervals of the PWL, to implement quantization inference of the model. The plurality of groups of fusion parameters are obtained by fusing a quantization process and a calculation process of the PWL that are in the target neural network model. In the inference process, target indication information may be directly determined based on the to-be-processed data, a target fusion parameter corresponding to the to-be-processed data is selected from the plurality of groups of fusion parameters based on the target indication information, and simple calculation is performed on the to-be-processed data based on the target fusion parameter, to obtain a processing result of the model, without performing a complex calculation process such as quantization and dequantization of the PWL. This implements quantization inference of all phases of the model, reduces calculation workload, and improves processing efficiency.

In addition, because the plurality of groups of fusion parameters are obtained by fusing the quantization process and the calculation process of the PWL that are in the target neural network model, inference precision of the target neural network quantization model provided in this application can theoretically be consistent with that of the target neural network model. In other words, the solution provided in this application can implement fast inference in a neural network having the PWL activation function, without sacrificing precision of an inference result.

The activation function of the target neural network model includes one or more PWLs. One PWL includes a plurality of intervals. In other words, one PWL corresponds to a plurality of groups of fusion parameters. The plurality of groups of fusion parameters are separately obtained through calculation based on parameters of the plurality of intervals of the PWL.

With reference to the first aspect, in some implementations of the first aspect, the processing the to-be-processed data by using a target neural network model includes: determining target indication information based on the to-be-processed data, where the target indication information indicates a fusion parameter related to the to-be-processed data; and obtaining, from the plurality of groups of fusion parameters based on the target indication information, a target fusion parameter corresponding to the target indication information, and processing the to-be-processed data based on the target fusion parameter.

For example, the target indication information may be an index of a target interval, that is, the target indication information may indicate the target interval. The target interval belongs to a plurality of intervals of one PWL.

Compared with a quantization inference process in which a ReLU is used as an activation function, in the quantization inference process in which the PWL is used as the activation function, only the target indication information needs to be additionally determined, and the corresponding fusion parameter is obtained based on the target indication information for calculation. However, using the PWL as the activation function can improve performance of the model. In other words, when the PWL is used as the activation function, performance of the model can be improved without introducing an excessive calculation workload.

With reference to the first aspect, in some implementations of the first aspect, the determining target indication information based on the to-be-processed data includes: processing an input feature of a first network layer based on a weight parameter of the first network layer in the target neural network quantization model, where the input feature of the first network layer is determined based on the to-be-processed data; and determining the target indication information based on a processing result of the first network layer.

With reference to the first aspect, in some implementations of the first aspect, the weight parameter of the first network layer is obtained by quantizing a weight parameter of a second network layer in the target neural network model, and the second network layer is a network layer that is in the target neural network model and that corresponds to the first network layer; and the determining the target indication information based on a processing result of the first network layer includes: processing the processing result of the first network layer based on a fusion bias parameter; and obtaining the target indication information through calculation based on a first result and an equivalent length of an intermediate interval in a plurality of intervals of a PWL corresponding to the second network layer, where the equivalent length of the intermediate interval is determined based on a length of the intermediate interval and a quantization parameter of the second network layer.

The second network layer may be any network layer in the target neural network model, provided that an activation function corresponding to the network layer is the PWL.

If the PWL is considered as an independent network layer, the PWL corresponding to the second network layer is a next network layer of the second network layer, and the next network layer of the second network layer is a PWL layer. If the PWL is considered as a step in multi-step calculation of network layers such as a convolution layer, the PWL corresponding to the second network layer is an activation operation performed by the second network layer, and an activation function used by the activation operation is the PWL.

In this case, lengths of intermediate intervals may be equal.

In this way, the target indication information can be determined by fully using the first result, and another calculation does not need to be performed to obtain the target indication information, thereby avoiding an unnecessary calculation and improving processing efficiency.

With reference to the first aspect, in some implementations of the first aspect, the equivalent length of the intermediate interval is an integer power of 2.

In this way, the index of the target interval, that is, the target indication information, may be obtained through shift (shift). Specifically, shifting data to the right by one bit is equivalent to an operation of dividing by 2. For example, the equivalent length of the intermediate interval is $2^n$, and n is an integer. When the index of the target interval is calculated, an operation of dividing by $2^n$ needs to be performed, and the operation can be implemented by shifting n bits, thereby avoiding performing the division operation by using a divider. No divider needs to be disposed in hardware, so that costs can be reduced. In addition, compared with the divider, the index of the target interval is obtained through shift, which can reduce calculation workload, reduce power consumption overheads, and improve inference efficiency.

With reference to the first aspect, in some implementations of the first aspect, the obtaining, from the plurality of groups of fusion parameters based on the target indication information, a target fusion parameter corresponding to the target indication information, and processing the to-be-processed data based on the target fusion parameter includes: obtaining a target fusion scaling parameter in the target fusion parameter based on the target indication information, and processing the first result based on the target fusion scaling parameter to obtain a second result; and obtaining a target fusion offset parameter in the target fusion parameter based on the target indication information, and processing the second result based on the target fusion offset parameter to obtain a third result.

The third result may be used as an input of a next network layer of the first network layer.

With reference to the first aspect, in some implementations of the first aspect, the method further includes: performing rounding processing on the third result.

In this case, a result obtained after rounding processing may be used as the input of the next network layer of the first network layer.

With reference to the first aspect, in some implementations of the first aspect, the method further includes: performing rounding processing on the second result; and the processing the second result based on the target fusion offset parameter to obtain a second result obtained after rounding processing includes: processing, based on the target fusion offset parameter, the second result obtained after rounding processing to obtain a third result.

In this case, the third result may be used as an input of a next network layer of the first network layer.

With reference to the first aspect, in some implementations of the first aspect, the target indication information meets the following formula:

$$i = \left\lfloor \frac{\overline{X} * \overline{W} - bias}{\overline{d}} \right\rfloor,$$

where $\overline{W}$ represents a quantized weight parameter of the second network layer, $\overline{X}$ represents a quantized input feature of the second network layer, i represents the target indication information, $\overline{d}$ represents the equivalent length of the intermediate interval, and bias represents the fusion bias parameter.

The equivalent length of the intermediate interval meets the following formula:

$$\overline{d} = \frac{d}{S_W \cdot S_X},$$

where d represents the length of the intermediate interval, $S_W$ represents a weight quantization parameter in the quantization parameter of the second network layer, and $S_X$ represents a feature quantization parameter in the quantization parameter of the second network layer.

With reference to the first aspect, in some implementations of the first aspect, the fusion bias parameter is determined based on at least one of the following: a weight parameter of the second network layer, a parameter of the PWL corresponding to the second network layer, or a quantization parameter of the second network layer.

With reference to the first aspect, in some implementations of the first aspect, the fusion bias parameter meets the following formula:

$$bias = \frac{LB - \overline{W} * S_W * \beta - b}{S_W * S_X},$$

where bias represents the fusion bias parameter, LB represents a left boundary in the parameter of the PWL corresponding to the second network layer, $\overline{W}$ represents a quantized weight parameter of the second network layer, b represents a bias parameter of the second network layer, $S_W$ represents a weight quantization parameter in the quantization parameter of the second network layer, and $\beta$ and $S_X$ represent feature quantization parameters in the quantization parameter of the second network layer.

With reference to the first aspect, in some implementations of the first aspect, the target fusion scaling parameter is determined based on at least one of the following: a parameter of the PWL corresponding to the second network layer, a quantization parameter of the second network layer, or a quantization parameter of a next network layer of the second network layer.

With reference to the first aspect, in some implementations of the first aspect, the target fusion scaling parameter meets the following formula:

$$scale_i = \frac{S_W * S_X * K_i}{S_Z},$$

where $scale_i$ represents the target fusion scaling parameter, i represents the target indication information, $S_W$ represents a weight quantization parameter in the quantization parameter of the second network layer, $S_X$ represents a feature quantization parameter in the quantization parameter of the second network layer, $S_Z$ represents a feature quantization parameter of the next network layer of the second network layer, and $K_i$ represents a slope of an $i^{th}$ interval in the PWL corresponding to the second network layer.

With reference to the first aspect, in some implementations of the first aspect, the target fusion offset parameter is determined based on at least one of the following: a parameter of the PWL corresponding to the second network layer or a quantization parameter of a next network layer of the second network layer.

With reference to the first aspect, in some implementations of the first aspect, the target fusion offset parameter meets the following formula:

$$offset_i = \frac{(LB - B_i) * K_i + P_i - \gamma}{S_Z},$$

where $offset_i$ represents the target fusion offset parameter, i represents the target indication information, $S_Z$ and $\gamma$ represent feature quantization parameters of the next network layer of the second network layer, $K_i$ represents a slope of an $i^{th}$ interval in the PWL corresponding to the second network layer, and $B_i$ represents a left endpoint of an $i^{th}$ interval in the PWL corresponding to the second network layer.

According to a second aspect, a training method for a neural network model is provided. The method includes: obtaining a neural network model, where an activation function of the neural network model includes a piecewise linear function PWL, and the PWL includes a plurality of intervals; training the neural network model based on training data to obtain a target neural network model, where the training data includes image data, audio data, or text data; and processing the target neural network model to obtain a target neural network quantization model, where the target neural network quantization model includes a plurality of groups of fusion parameters, and there is a correspondence between the plurality of groups of fusion parameters and the plurality of intervals of the PWL in the target neural network model.

In an existing solution, only a weight parameter in a model in which the PWL is used as the activation function can be quantized, and a parameter of the PWL cannot be quantized. In this way, in an inference process, calculation of the activation function needs to be performed based on the parameter of the PWL. In other words, the model obtained by using the existing training solution cannot implement quantization inference. According to the solution in this embodiment of this application, the target neural network model is processed to obtain the target neural network quantization model. The target neural network quantization model includes the plurality of groups of fusion parameters, so that the target neural network quantization model can perform processing based on the plurality of groups of fusion parameters corresponding to the plurality of intervals of the PWL in the inference process, which is equivalent to implement complete quantization of the target neural network model. Specifically, the quantization process and a calculation process of the PWL that are in the target neural network model are fused to obtain the plurality of groups of fusion parameters, so that a processing result is obtained based on the plurality of groups of fusion parameters in the inference process, and calculation of the PWL does not need to be additionally performed. This helps implement quantization inference of the model, reduce calculation workload, and improve processing efficiency.

In addition, the target neural network quantization model is obtained by fusing the quantization process and the calculation process of the PWL that are in the target neural network model, so that inference precision of the target neural network quantization model can theoretically be consistent with that of the target neural network model.

The activation function of the neural network model includes one or more PWLs. In other words, at least one activation function in the neural network model is the PWL.

With reference to the second aspect, in some implementations of the second aspect, the processing the target neural network model to obtain a target neural network quantization model includes: obtaining the plurality of groups of fusion parameters based on parameters of the plurality of intervals of the PWL in the target neural network model and a weight quantization parameter and a feature quantization parameter that are of the neural network model, to obtain the target neural network quantization model, where the weight quantization parameter and the feature quantization parameter that are of the neural network model are obtained through quantization training.

A quantization parameter includes the weight quantization parameter and the feature quantization parameter. The weight quantization parameter is used to quantize a weight parameter in the model to obtain a quantized weight parameter. The feature quantization parameter is used to quantize an input feature to obtain a quantized feature.

With reference to the second aspect, in some implementations of the second aspect, the plurality of groups of fusion parameters include a plurality of groups of fusion scaling parameters, and the fusion scaling parameter is determined based on at least one of the following: parameters of the plurality of intervals of the PWL in the target neural network model, a quantization parameter of a network layer before the PWL in the target neural network model, or a quantization parameter of a network layer after the PWL in the target neural network model.

With reference to the second aspect, in some manners of the second aspect, the plurality of groups of fusion parameters include a plurality of groups of fusion offset parameters, and the fusion offset parameter is determined based on at least one of the following: parameters of the plurality of intervals of the PWL in the target neural network model or a quantization parameter of a network layer after the PWL in the target neural network model.

With reference to the second aspect, in some implementations of the second aspect, the obtaining the target neural network model based on a trained neural network model includes: adjusting a length of an intermediate interval of a PWL in the trained neural network model to obtain an adjusted neural network model; and obtaining the target neural network model based on the adjusted neural network model.

According to the solution in this embodiment of this application, the length of the intermediate interval can be adjusted, to obtain a length of an intermediate interval that meets a requirement, thereby improving flexibility of the model. In addition, the model is trained, thereby ensuring precision of the model.

With reference to the second aspect, in some implementations of the second aspect, the training the neural network model based on training data to obtain a target neural network model includes: training the neural network model based on the training data; adjusting a length of an intermediate interval of a PWL in the neural network model, to obtain an adjusted neural network model; and training the adjusted neural network model based on the training data.

According to the solution in this embodiment of this application, the length of the intermediate interval can be adjusted, to obtain a length of an intermediate interval that meets a requirement, thereby improving flexibility of the model. In addition, the model is trained, thereby ensuring precision of the model.

With reference to the second aspect, in some implementations of the second aspect, the adjusting a length of an intermediate interval of a PWL in the trained neural network model to obtain an adjusted neural network model includes: determining a target scaling coefficient of the PWL in the trained neural network model based on an equivalent length of the intermediate interval of the PWL in the trained neural network model, where the equivalent length of the intermediate interval is determined based on the length of the intermediate interval of the PWL in the trained neural network model and the weight quantization parameter and the feature quantization parameter that are of the neural network model; and adjusting, based on the target scaling coefficient, a parameter of a target network layer in the trained neural network model and the length of the intermediate interval of the PWL in the trained neural network model, to obtain the adjusted neural network model, where the target network layer corresponds to the PWL in the trained neural network model.

In other words, the PWL in the trained neural network is a PWL corresponding to the target network layer. The PWL in the trained neural network model may be located at the target network layer. Alternatively, the PWL in the trained neural network may be located after the target network layer, and the target network layer is adjacent to the PWL in the trained neural network model.

Specifically, the equivalent length of the intermediate interval is obtained by dividing the length of the intermediate interval by the quantization parameter.

With reference to the second aspect, in some implementations of the second aspect, the determining a target scaling coefficient of the PWL in the trained neural network model based on an equivalent length of the intermediate interval of the PWL in the trained neural network model includes: determining the target scaling coefficient based on the equivalent length of the intermediate interval and an integer power of 2 that is closest to the equivalent length of the intermediate interval.

For example, the integer power of 2 that is closest to the equivalent length of the intermediate interval meets the following formula:

$$d' = 2^{\lfloor \log_2 \bar{d} \rfloor},$$

where $\bar{d}$ represents the equivalent length of the intermediate interval, $d'$ represents the integer power of 2 that is closest to the equivalent length of the intermediate interval, and $\lfloor \rfloor$ represents a rounding down operation.

According to the solution in this embodiment of this application, the length of the intermediate interval of the PWL is adjusted, for example, a boundary of the PWL is adjusted, so that the equivalent length of the intermediate interval of the PWL is close to the integer power of 2. This helps constrain the equivalent length of the intermediate interval of the PWL to the integer power of 2, thereby implementing quantization of the parameter of the PWL. In addition, the model is trained to ensure precision of the model. In this way, in a subsequent quantization inference process of the model, an index of a target interval may be obtained through shift (shift), thereby avoiding performing a division operation by using a divider. No divider needs to be disposed in hardware, so that costs can be reduced. In addition, compared with the divider, the index of the target interval is obtained through shift, which can reduce calculation workload, reduce power consumption overheads, and improve inference efficiency.

With reference to the second aspect, in some implementations of the second aspect, the determining the target scaling coefficient based on the equivalent length of the intermediate interval and an integer power of 2 that is closest to the equivalent length of the intermediate interval includes: calculating a first scaling coefficient based on the equivalent length of the intermediate interval and the integer power of 2 that is closest to the equivalent length of the intermediate interval, where when the first scaling coefficient is within a target range, the target scaling coefficient is the first scaling coefficient; and when the first scaling coefficient is outside the target range, the target scaling coefficient is a boundary value of the target range.

With reference to the second aspect, in some implementations of the second aspect, the first scaling coefficient meets the following formula:

$$s = \frac{d'}{\bar{d}},$$

where s represents the first scaling coefficient, d' represents the integer power of 2 that is closest to the equivalent length of the intermediate interval, and $\bar{d}$ represents the equivalent length of the intermediate interval.

With reference to the second aspect, in some implementations of the second aspect, the equivalent length of the intermediate interval meets the following formula:

$$\bar{d} = \frac{RB - LB}{N \cdot S_W \cdot S_X},$$

where $\bar{d}$ represents the equivalent length of the intermediate interval, LB represents a left boundary of the PWL, RB represents a right boundary of the PWL, N represents a quantity of intermediate intervals of the PWL, $S_W$ represents a weight quantization parameter of the target network layer, and $S_X$ represents a feature quantization parameter of the target network layer.

According to a third aspect, a data processing apparatus is provided. The apparatus includes a module or a unit configured to perform the method in any one of the first aspect or the implementations of the first aspect.

According to a fourth aspect, a neural network model training apparatus is provided. The apparatus includes a module or a unit configured to perform the method in any one of the second aspect or the implementations of the second aspect.

It should be understood that extensions to, limitations on, explanations for, and description of corresponding content in the first aspect are also applicable to same content in the second aspect, the third aspect, and the fourth aspect.

According to a fifth aspect, a data processing apparatus is provided. The apparatus includes: a memory, configured to store a program; and a processor, configured to execute the program stored in the memory. When the program stored in the memory is executed, the processor is configured to perform the method in any one of the first aspect and the implementations of the first aspect.

The processor in the fifth aspect may be a central processing unit (central processing unit, CPU), or may be a combination of a CPU and a neural network operation processor. The neural network operation processor herein may include a graphics processing unit (graphics processing unit, GPU), a neural-network processing unit (neural-network processing unit, NPU), a tensor processing unit (tensor processing unit, TPU), and the like. The TPU is an artificial intelligence accelerator-specific integrated circuit customized by Google (Google) for machine learning.

According to a sixth aspect, a neural network model training apparatus is provided. The apparatus includes: a memory, configured to store a program; and a processor, configured to execute the program stored in the memory. When the program stored in the memory is executed, the processor is configured to perform the method in any one of the second aspect and the implementations of the second aspect.

The processor in the sixth aspect may be a central processing unit, or may be a combination of a CPU and a neural network operation processor. The neural network operation processor herein may include a graphics processing unit, a neural-network processing unit, a tensor processing unit, and the like. The TPU is an artificial intelligence accelerator-specific integrated circuit customized by Google for machine learning.

According to a seventh aspect, a computer-readable storage medium is provided. The computer-readable storage medium stores program code to be executed by a device, and the program code is used to perform the method in any one of the implementations of the first aspect or the second aspect.

According to an eighth aspect, a computer program product including instructions is provided. When the computer program product runs on a computer, the computer is enabled to perform the method in any one of the implementations of the first aspect or the second aspect.

According to a ninth aspect, a chip is provided. The chip includes a processor and a data interface. The processor performs the method in any one of the implementations of the first aspect or the second aspect by reading, through the data interface, instructions stored in a memory.

Optionally, in an implementation, the chip may further include the memory, and the memory stores the instructions. The processor is configured to execute the instructions stored in the memory, and when the instructions are executed, the processor is configured to perform the method in any one of the implementations of the first aspect or the second aspect.

The foregoing chip may be specifically a field programmable gate array (field programmable gate array, FPGA) or an application-specific integrated circuit (application-specific integrated circuit, ASIC).

## BRIEF DESCRIPTION OF DRAWINGS

FIG. 1 is a schematic diagram of an artificial intelligence main framework according to an embodiment of this application;

FIG. 2 is a schematic diagram of a partial structure of a neural network model;

FIG. 3 is a schematic diagram of a piecewise linear function according to an embodiment of this application;

FIG. 4 is a schematic flowchart of a processing process of a neural network model according to an embodiment of this application;

FIG. 5 is a schematic diagram of a structure of a system architecture according to an embodiment of this application;

FIG. 6 is a schematic diagram of a hardware structure of a chip according to an embodiment of this application;

FIG. 7 is a schematic diagram of a system architecture according to an embodiment of this application;

FIG. 8 is a schematic diagram of an application scenario according to an embodiment of this application;

FIG. 9 is a schematic flowchart of a neural network model training method according to an embodiment of this application;

FIG. 10 is a schematic flowchart of another neural network model training method according to an embodiment of this application;

FIG. 11 is a schematic flowchart of a forward propagation process of a neural network model according to an embodiment of this application;

FIG. 12 is a schematic flowchart of a data processing method according to an embodiment of this application;

FIG. 13 is a schematic block diagram of a data processing method according to an embodiment of this application;

FIG. 14 is a schematic block diagram of a neural network model training apparatus according to an embodiment of this application;

FIG. 15 is a schematic block diagram of a data processing apparatus according to an embodiment of this application;

FIG. 16 is a schematic block diagram of a neural network model training apparatus according to an embodiment of this application; and

FIG. 17 is a schematic block diagram of a data processing apparatus according to an embodiment of this application.

## DESCRIPTION OF EMBODIMENTS

The following describes technical solutions of this application with reference to accompanying drawings.

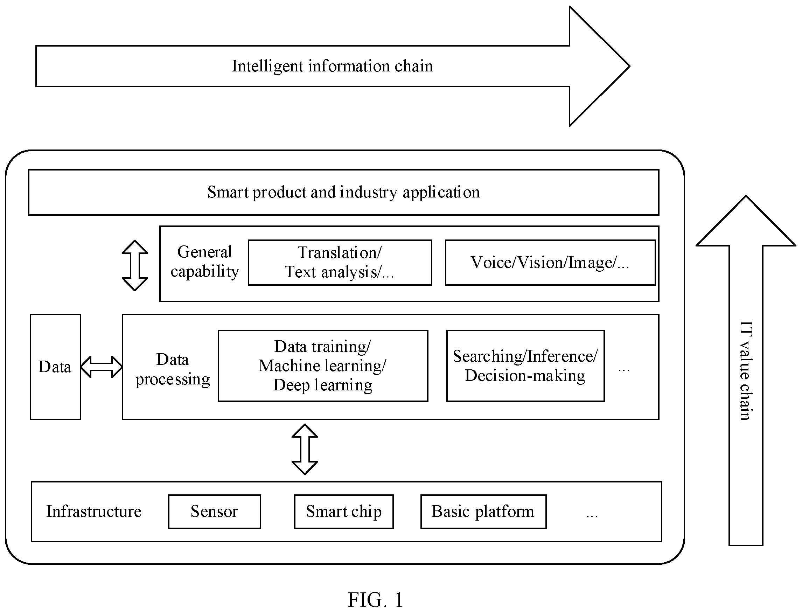

FIG. 1 is a schematic diagram of an artificial intelligence main framework. The main framework describes an overall working procedure of an artificial intelligence system, and is applicable to a requirement of a general artificial intelligence field.

The following describes in detail the foregoing artificial intelligence main framework from two dimensions: an "intelligent information chain" (horizontal axis) and an "information technology (information technology, IT) value chain" (vertical axis).

The "intelligent information chain" reflects a series of processes from obtaining data to processing the data. For example, the "intelligent information chain" may be a general process of intelligent information perception, intelligent information representation and formation, intelligent reasoning, intelligent decision-making, and intelligent execution and output. In this process, data undergoes a refining process of "data - information - knowledge - intelligence".

The "IT value chain", from the underlying artificial intelligence infrastructure and information (provision and processing of technical realizations) to the system's industry ecosystem, reflects the value that artificial intelligence contributes to the information technology industry.

(1) Infrastructure

The infrastructure provides computing capability support for the artificial intelligence system, to communicate with the outside world and implement support by using an infrastructure platform.

The infrastructure can communicate with the outside by using a sensor, and a calculation capability of the infrastructure can be provided by a smart chip.

The smart chip herein may be a hardware acceleration chip such as a central processing unit (central processing unit, CPU), a neural-network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA).

The basic platform of the infrastructure may include related platforms, for example, a distributed computing framework and a network, for assurance and support, including cloud storage and computing, an interconnection network, and the like.

For example, the infrastructure can communicate with the outside by using the sensor, to obtain data, and the data is provided to a smart chip in a distributed computing system provided by the basic platform for computing.

(2) Data

Data at an upper layer of the infrastructure indicates a data source in the artificial intelligence field. The data relates to a graph, an image, voice, and text, further relates to Internet of things data of a conventional device, and includes service data of an existing system and perception data such as force, displacement, a liquid level, a temperature, and humidity.

(3) Data processing

The foregoing data processing usually includes a processing manner such as data training, machine learning, deep learning, searching, inference, or decision-making.

The machine learning and the deep learning may be used for performing symbolic and formal intelligent information modeling, extraction, preprocessing, training, and the like on data.

The reasoning is a process of performing machine thinking and solving problems by simulating an intelligent reasoning mode of humans in a computer or intelligent system by using formal information and according to a reasoning control policy. Typical functions are searching and matching.

The decision-making is a process of performing decision-making after performing reasoning on intelligent information, and usually provides classification, sorting, prediction, and other functions.

(4) General capability

After data undergoes the foregoing data processing, some general capabilities may be further formed based on a data processing result. For example, the general capabilities may be an algorithm or a general system, for example, translation, text analysis, computer vision processing, speech recognition, and image recognition.

(5) Smart product and industry application

The smart product and the industry application are a product and an application of the artificial intelligence system in various fields, and are package of an overall solution of the artificial intelligence, so that decision-making for intelligent information is productized and an application is implemented. Application fields mainly include smart manufacturing, smart transportation, smart home, smart health care, smart security protection, autonomous driving, a smart city, a smart terminal, or the like.

Embodiments of this application may be applied to many fields of artificial intelligence, for example, fields such as smart manufacturing, smart transportation, smart home, smart health care, smart security protection, autonomous driving, a smart city, a smart terminal, or the like.

Specifically, embodiments of this application may be applied to fields in which a (deep) neural network needs to be used, for example, autonomous driving, image classification, image retrieval, image semantic segmentation, image quality enhancement, image super-resolution processing, and natural language processing.

The following briefly describes two application scenarios: album image classification and monitoring.

Album image classification:

When a user stores a large quantity of images on a terminal device (for example, a mobile phone) or a cloud disk, recognition of images in an album may help the user or a system perform classification management on the album. This improves user experience.

According to the data processing method in embodiments of this application, an inference speed of a neural network can be improved. The images are classified by using the data processing method in embodiments of this application, to improve a classification speed. This helps label images of different categories in real time, and facilitates viewing and searching by the user. In addition, classification labels of the images may also be provided for an album management system for classification management. This saves management time of the user, improves album management efficiency, and improves user experience.

Monitoring:

Monitoring scenarios include a smart city, field monitoring, indoor monitoring, outdoor monitoring, and in-vehicle monitoring. In the smart city scenario, a plurality of types of attribute recognition need to be performed, for example, pedestrian attribute recognition and cycling attribute recognition. The deep neural network plays an important role in the plurality of types of attribute recognition by using a powerful capability of the deep neural network.

According to the data processing method in embodiments of this application, an inference speed of the neural network can be improved. The data processing method in embodiments of this application is used to process an input road image, so that different attribute information in the road image can be identified in real time.

Because embodiments of this application relate to a plurality of applications of the neural network, for ease of understanding, the following describes terms and concepts related to the neural network that may be used in embodiments of this application.

(1) Neural network

The neural network may include a neural unit. The neural unit may be an operation unit that uses $x_s$ and an intercept of 1 as inputs. An output of the operation unit may be as follows:

$$h_{W,b}(x) = f(W^T x) = f\left(\sum_{s=1}^{n} W_s x_s + b\right) \quad (1\text{-}1)$$

s=1, 2, ..., or n, n is a natural number greater than 1, $W_s$ is a weight of $x_s$, and b is a bias of the neural unit.

f is an activation function (activation function) of the neural unit, which is used to introduce a nonlinear feature into the neural network, to convert an input signal in the neural unit into an output signal. The output signal of the activation function may be used as an input of a next layer. The activation function is usually a scalar function from a real number domain to another real number domain, and includes a specific non-linear part. For example, the activation function may be a ReLU, tanh, or sigmoid function.

The neural network is a network formed by connecting a plurality of single neural units together. To be specific, an output of a neural unit may be an input of another neural unit. An input of each neural unit may be connected to a local receptive field of a previous layer to extract a feature of the local receptive field. The local receptive field may be a region including several neural units.

(2) Deep neural network

The deep neural network (deep neural network, DNN), also referred to as a multi-layer neural network, may be understood as a neural network having a plurality of hidden layers. The DNN is divided based on locations of different layers, so that the neural network in the DNN can be divided into three types: an input layer, hidden layers, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer.

Although the DNN seems complex, the DNN is actually not complex in terms of work at each layer, and is simply expressed as the following linear relationship expression: $\vec{y} = \alpha(W\vec{x} + \vec{b})$, , where $\vec{x}$ is an input vector, $\overline{y}$ is an output vector, $\vec{b}$ is an offset vector, $W$ is a weight matrix (also referred to as a coefficient), and $\alpha()$ is an activation function. At each layer, the output vector $\overline{y}$ is obtained by performing such a simple operation on the input vector $\vec{x}$. Because there are a plurality of layers in the DNN, there are also a plurality of coefficients W and a plurality of offset vectors $\vec{b}$. Definitions of these parameters in the DNN are as follows. The coefficient $W$ is used as an example. It is assumed that in a DNN having three layers, a linear coefficient from the fourth neuron at the second layer to the second neuron at the third layer is defined as $W_{42}^{3}$ . The superscript 3 indicates a layer at which the coefficient $W$ is located, and the subscript corresponds to an output third-layer index 2 and an input second-layer index 4.

In conclusion, a coefficient from a $k^{th}$ neuron in an $(L-1)^{th}$ layer to a $j^{th}$ neuron in an $L^{th}$ layer is defined as $W_{kj}^{L}$ .

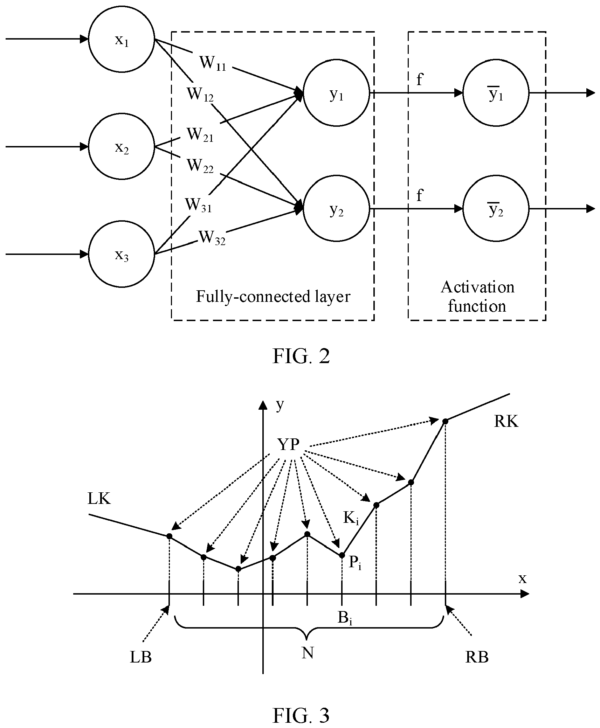

The activation function is usually placed after a convolution layer or a fully-connected layer. FIG. 2 shows a fully-connected layer and an activation function after the fully-connected layer. In FIG. 2, an input vector $\vec{x}$ is $(x_1, x_2, x_3)$, an output vector $\vec{y}$ is $(\overline{y}_1, \overline{y}_2)$, a weight matrix $W$ is a matrix formed by weights of the fully-connected layer shown in FIG. 2 (a superscript of the weight matrix is omitted in FIG. 2), and f represents the activation function. The input vector $(x_1, x_2, x_3)$ is processed by the fully-connected layer and then output as $(y_1, y_2)$, and then the output vector $(\overline{y}_1, \overline{y}_2)$ is obtained by using the activation function f.

It should be noted that the input layer does not have the parameter $W$. In the deep neural network, more hidden layers make the network more capable of describing a complex case in the real world. Theoretically, a model with more parameters has higher complexity and a larger "capacity". It indicates that the model can complete a more complex learning task. Training of the deep neural network is a process of learning a weight matrix, and a final objective of the training is to obtain a weight matrix of all layers of a trained deep neural network (a weight matrix formed by vectors of many layers).

(3) Convolutional neural network

The convolutional neural network (convolutional neuron network, CNN) is a deep neural network with a convolutional structure. The convolutional neural network includes a feature extractor that includes a convolutional layer and a sampling sublayer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neural units that are in a rectangular arrangement. Neural units at a same feature plane share a weight, and the weight shared herein is a convolution kernel. Weight sharing may be understood as that an image information extraction manner is irrelevant to a location. The convolution kernel may be initialized in a form of a matrix of a random size. In a training process of the convolutional neural network, an appropriate weight may be obtained for the convolution kernel through learning. In addition, benefits directly brought by weight sharing are that connections among layers of the convolutional neural network are reduced, and an overfitting risk is reduced.

(4) Loss function

In a process of training a deep neural network, because it is expected that an output of the deep neural network is as close as possible to a value that actually needs to be predicted, a current predicted value of the network and an actually expected target value may be compared, and then a weight vector of each layer of the neural network is updated based on a difference between the current predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the actually expected target value or a value that more approximates the actually expected target value. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example.

A higher output value (loss) of the loss function indicates a larger difference. Therefore, training of the deep neural network is a process of minimizing the loss as much as possible. Generally, a smaller loss indicates higher training quality of the deep neural network, and a larger loss indicates lower training quality of the deep neural network. Similarly, a smaller loss fluctuation indicates more stable training, and a larger loss fluctuation indicates more unstable training.

(5) Back propagation algorithm

In a training process, a neural network may correct a value of a parameter of a neural network model by using an error back propagation (back propagation, BP) algorithm, so that a reconstruction error loss of the neural network model becomes increasingly smaller. Specifically, an input signal is forward transferred until the error loss is generated in an output, and the parameter of the neural network model is updated through back propagation of information about the error loss, to converge the error loss. The back propagation algorithm is an error-loss-centered back propagation motion intended to obtain a parameter, such as a weight matrix, of an optimal neural network model.

For example, a loss value generated during each training of the neural network model is transferred layer by layer from back to front in the neural network model. When the loss value is transferred to each layer, an update amount of a parameter at the layer is calculated (a partial derivative operation). The update amount is related to a gradient (gradient). A gradient value is linearly positively correlated with the loss value.

(6) PWL

The piecewise function refers to a function represented by using different expressions in different intervals or points of a definition domain of the piecewise function. A common endpoint of two adjacent intervals is referred to as a demarcation point of the piecewise function. In other words, the piecewise function includes a plurality of segments of functions with different definition domains. The definition domain of the piecewise function is a union set of definition domains of the plurality of segments of functions, and a value range of the piecewise function is a union set of value ranges of the plurality of segments of functions.

The piecewise linear function refers to linear functions having different slopes in the different intervals of the definition domain of the piecewise linear function, that is, the piecewise linear function is a linear function in each interval of the definition domain of the piecewise linear function, and the piecewise linear function is a non-linear function as a whole.

One piecewise linear function may be defined by a combination of a plurality of parameters. Different activation functions can be obtained by setting different values for the parameters.

For example, the one piecewise linear function includes the following parameters: a demarcation point, slopes in a plurality of intervals, and a function value corresponding to any demarcation point.

The slopes in the plurality of intervals are slopes of the piecewise linear function in the plurality of intervals.

A definition domain of the one piecewise linear function is divided into a plurality of intervals based on the demarcation point. The piecewise linear function is a linear function in each of the plurality of intervals. In other words, the piecewise linear function includes a plurality of linear functions in the plurality of intervals. A slope of the piecewise linear function in any one of the plurality of intervals is a slope of a linear function in this interval. A function value corresponding to the demarcation point is a function value corresponding to a value of the demarcation point in the piecewise linear function. In other words, in a coordinate system in which the piecewise linear function is located, the value of the demarcation point is used as a horizontal coordinate, and in the piecewise linear function, a vertical coordinate corresponding to the horizontal coordinate is the function value corresponding to the demarcation point.

For another example, the one piecewise linear function includes the following parameters: a demarcation point, a slope of the piecewise linear function in an interval with a maximum definition domain, a slope of the piecewise linear function in an interval with a minimum definition domain, and a function value corresponding to the demarcation point.

For another example, the one piecewise linear function includes the following parameters: a quantity of demarcation points, a right boundary, a left boundary, a slope of an interval with a maximum definition domain, a slope of an interval with a minimum definition domain, and a function value corresponding to the demarcation point. In this case, lengths of intermediate intervals may be equal. The intermediate interval is an interval between the left boundary and the right boundary in the plurality of intervals of the piecewise linear function. In this way, values of remaining demarcation points can be determined based on the right boundary RB and the left boundary LB.

The right boundary is a maximum value of the demarcation points, and the left boundary is a minimum value of the demarcation points.

The quantity of demarcation points may also be replaced with a quantity of intermediate intervals. In other words, the one piecewise linear function includes the following parameters: a quantity of intermediate intervals, a right boundary, a left boundary, a slope of an interval with a maximum definition domain, a slope of an interval with a minimum definition domain, and a function value corresponding to the demarcation point.

The interval with the maximum definition domain and the interval with the minimum definition domain may also be referred to as intervals at two ends of the plurality of intervals. Function values YP corresponding to a plurality of demarcation points may be represented as an array, and each element in the array represents one function value, and is separately corresponding to one demarcation point.

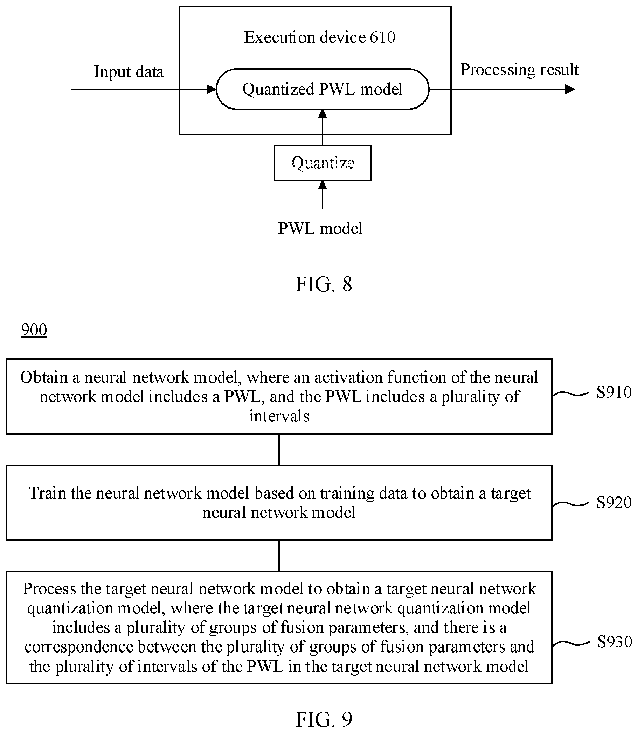

FIG. 3 is a schematic diagram of a piecewise linear function. The following describes the foregoing parameters with reference to FIG. 3. A quantity of demarcation points in FIG. 3 is 9. A right boundary RB and a left boundary LB are shown in FIG. 9. A definition domain of the piecewise linear function is divided into 10 intervals based on the nine demarcation points, and a quantity N of intermediate intervals is 8. In the 10 intervals, an interval with a maximum definition domain is a rightmost interval in the coordinate system, and an interval with a minimum definition domain is a leftmost interval in the coordinate system. A slope RK of the piecewise linear function in the interval with the maximum definition domain is a slope RK of the piecewise linear function in the rightmost interval. A slope RK of the piecewise linear function in the interval with the minimum definition domain is a slope LK of the piecewise linear function in the leftmost interval. Function values corresponding to the nine demarcation points may be represented as an array YP of function values of horizontal coordinates corresponding to the nine demarcation points in the piecewise linear function. FIG. 9 further shows a value $P_i$ of a vertical coordinate corresponding to a horizontal coordinate $B_i$ corresponding to a left endpoint of an $i^{th}$ interval in the piecewise linear function, and a slope of the $i^{th}$ interval is $k_i$. i is an integer greater than or equal to 1 and less than or equal to N.

In a neural network model in embodiments of this application, a PWL is used as an activation function, and a plurality of function forms may be obtained through fitting by adjusting a plurality of trainable parameters of the PWL. This helps obtain a better activation function, effectively improves a fitting capability of the neural network model, and further improves performance of the model. In addition, in a training process of the model, the plurality of trainable parameters of the PWL are updated by using a parameter gradient, thereby reducing running overheads, and improving construction efficiency of the activation function and training efficiency of the model. Therefore, activation function search may be implemented for different models, to obtain activation functions suitable for the different models, and performance of the model is improved.

(7) Model quantization

Model quantization is a way to improve an inference speed of a model.

Generally, a full-precision neural network model obtained after training is a floating-point model, and a parameter in the floating-point model includes a floating-point parameter. Model quantization refers to a process of quantizing the floating-point model to obtain a quantization model. Specifically, a data type of the parameter of the model is quantized from a floating-point type to an integer type, and correspondingly, calculation of the model is also converted from floating-point calculation to integer calculation. In this way, calculation efficiency can be significantly improved. A computing unit for integer data may be set on hardware, to implement efficient inference of the quantization model.

Eight-bit (bit) quantization is used as an example. For example, a 32-bit floating-point model is quantized to obtain an 8-bit quantization model. A data type of a parameter in the 32-bit floating-point model is 32-bit floating-point data, and a data type of a parameter in the 8-bit quantization model is 8-bit integer data. In this case, compared with the 32-bit floating-point model, memory usage of the 8-bit quantization model is reduced by four times, the inference speed is improved, and power consumption is reduced accordingly.

(8) Learned step size quantization (learned step size quantization, LSQ)

To obtain the quantization model, quantization training may be performed on the floating-point model. In this way, precision of a quantization model obtained after quantization training may approach precision of the floating-point model before quantization to a maximum extent, that is, precision of the quantization model is ensured.

The LSQ is a typical quantization training method. Quantization and dequantization operations are inserted into the floating-point model, so that a network can adapt to quantization calculation in the training process.

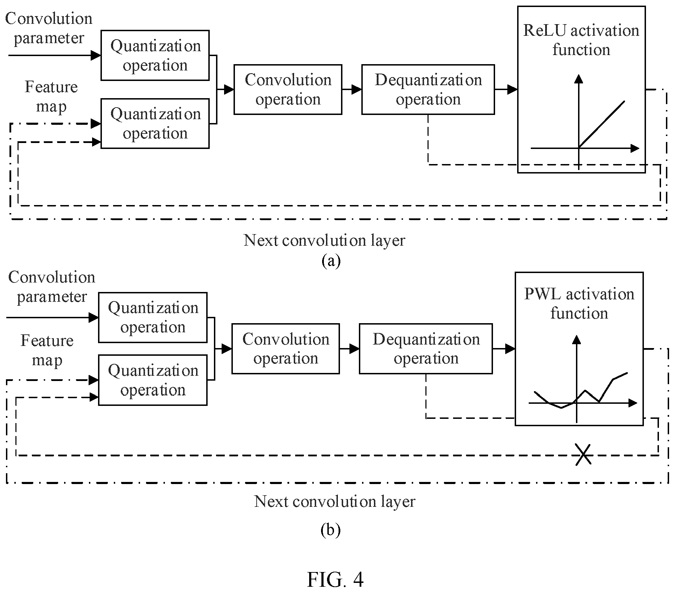

FIG. 4 is a flowchart of the LSQ. In a quantization training process, a convolution parameter of a current convolution layer is quantized to obtain a quantized convolution parameter, and a feature map input to the current convolution layer is quantized to obtain a quantized feature map. A convolution operation is performed based on the quantized convolution parameter and the quantized feature map, and a dequantization operation is performed on a result obtained after the convolution operation. A result of the dequantization operation is processed by using an activation function, and a processed result may be used as a feature map that is input to a next convolution layer. As shown in (a) in FIG. 4, the activation function may be a ReLU.

The convolution parameter is a convolution weight. For example, a quantization operation of the convolution parameter in FIG. 4 may meet the following formula:

$$\overline{W} = round(\frac{W}{S_W}),$$

where $\overline{W}$ represents a quantized convolution weight, W represents a convolution weight before quantization, $S_W$ represents a quantization training parameter of the convolution weight, and round() represents a rounding operation.

For example, a quantization operation of the feature map in FIG. 4 may meet the following formula:

$$\overline{X} = round(\frac{X - \beta}{S_X}),$$

where $\overline{X}$ represents a quantized feature map, X represents a feature map before quantization, and $S_X$ and $\beta$ represent quantization training parameters of the feature map.

For example, a convolution operation in FIG. 4 may meet the following formula:

$$\overline{Y} = \overline{X} * \overline{W},$$

where $\overline{Y}$ may represent a result obtained after the convolution operation.

For example, a dequantization operation in FIG. 4 may meet the following formula:

$$\hat{Y} = \overline{Y} * S_W * S_X + \overline{W} * S_W * \beta,$$

where $\hat{Y}$ may represent a result obtained after the dequantization operation.

As shown in (a) in FIG. 4, the activation function is the ReLU. An output of the ReLU has only two cases: y=x and y=0. x indicates data input to the ReLU, and y indicates output data processed by the ReLU. In other words, the ReLU is linear to a multiplication operation, that is, ReLU (x*A) =ReLU (x)*A. As shown in (a) in FIG. 4, after quantization training is completed, a parameter of the dequantization operation may be fused with a parameter of a feature map quantization operation of a next layer, so that the dequantization operation and the feature map quantization operation of the next layer are fused into one operation. After quantization training is completed, a quantization model obtained after quantization training may be deployed for inference. Data types of parameters of the quantization model are all quantized integer data, which reduces memory usage. In the inference process of the quantization model, no dequantization operation is required, that is, no floating-point calculation is required, and an integer calculation manner is used, which greatly improves calculation efficiency and reduces power consumption.

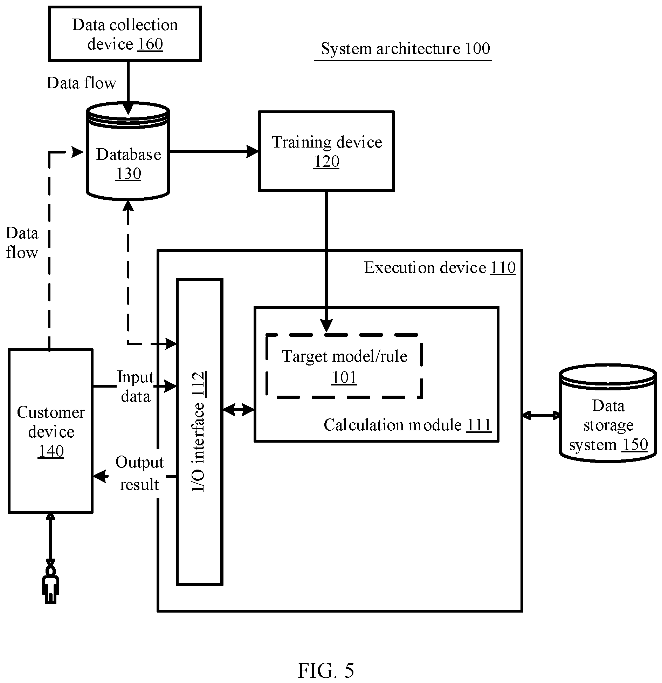

As shown in FIG. 5, an embodiment of this application provides a system architecture 100. In FIG. 5, a data collection device 160 is configured to collect training data. For example, for a data processing method in this embodiment of this application, if the data is image data, the training data may include a training image and a classification result corresponding to the training image. The classification result of the training image may be a result of manual pre-labeling.

After collecting the training data, the data collection device 160 stores the training data in a database 130, and a training device 120 obtains a target model/rule 101 through training based on the training data maintained in the database 130.

That the training device 120 obtains the target model/rule 101 based on the training data is described in the following. The training device 120 processes input original data, and compares an output value with a target value until a difference between the value output by the training device 120 and the target value is less than a specific threshold, to complete training of the target model/rule 101.

The target model/rule 101 can be used for implementing the data processing method in this embodiment of this application. The target model/rule 101 in this embodiment of this application may specifically be a neural network model, for example, a convolutional neural network. It should be noted that, during actual application, the training data maintained in the database 130 is not necessarily all collected by the data collection device 160, and may be received from another device. It should further be noted that the training device 120 may not necessarily train the target model/rule 101 completely based on the training data maintained in the database 130, or may obtain training data from a cloud or another place to perform model training. The foregoing descriptions should not be construed as a limitation on this embodiment of this application.

The target model/rule 101 obtained through training by the training device 120 may be applied to different systems or devices, for example, an execution device 110 shown in FIG. 5. The execution device 110 may be a terminal, for example, a mobile phone terminal, a tablet, a laptop computer, augmented reality (augmented reality, AR) AR/virtual reality (virtual reality, VR), a vehicle-mounted terminal, may be a server, a cloud, or the like. In FIG. 5, the execution device 110 configures an input/output (input/output, I/O) interface 112, configured to exchange data with an external device. A user may input data to the I/O interface 112 by using a client device 140, where the input data in this embodiment of this application may include to-be-processed data input by the client device.

In a related processing procedure in which the execution device 110 preprocesses the input data or a calculation module 111 of the execution device 110 performs calculation, the execution device 110 may invoke data, code, and the like in a data storage system 150 to perform corresponding processing, and may also store, into the data storage system 150, data, instructions, and the like obtained through corresponding processing.

Finally, the I/O interface 112 returns a processing result, for example, the foregoing obtained data processing result, to the client device 140, to provide the processing result for the user.

It should be noted that the training device 120 may generate corresponding target models/rules 101 for different targets or different tasks based on different training data. The corresponding target models/rules 101 may be used to implement the foregoing targets or complete the foregoing tasks, to provide a required result for the user.

In a case shown in FIG. 5, the user may manually input data and the user may input the data on an interface provided by the I/O interface 112. In another case, the client device 140 may automatically send input data to the I/O interface 112. If it is required that the client device 140 needs to obtain authorization from the user to automatically send the input data, the user may set corresponding permission on the client device 140. The user may view, on the client device 140, a result output by the execution device 110. Specifically, the result may be presented in a form of displaying, a sound, an action, or the like. The client device 140 may alternatively be used as a data collection end, to collect, as new sample data, input data that is input to the I/O interface 112 and an output result that is output from the I/O interface 112 that are shown in the figure, and store the new sample data in a database 130. It is clear that the client device 140 may alternatively not perform collection. Instead, the I/O interface 112 directly stores, in the database 130 as new sample data, the input data input to the I/O interface 112 and the output result output from the I/O interface 112.

It should be noted that FIG. 5 is merely a schematic diagram of the system architecture according to an embodiment of this application. A location relationship between a device, a component, a module, and the like shown in the figure constitutes no limitation. For example, in FIG. 5, the data storage system 150 is an external memory relative to the execution device 110. In another case, the data storage system 150 may alternatively be disposed in the execution device 110.

As shown in FIG. 5, the target model/rule 101 is obtained through training based on the training device 120. The target model/rule 101 may be a neural network in this application in this embodiment of this application. Specifically, the neural network constructed in this embodiment of this application may be a CNN or the like.

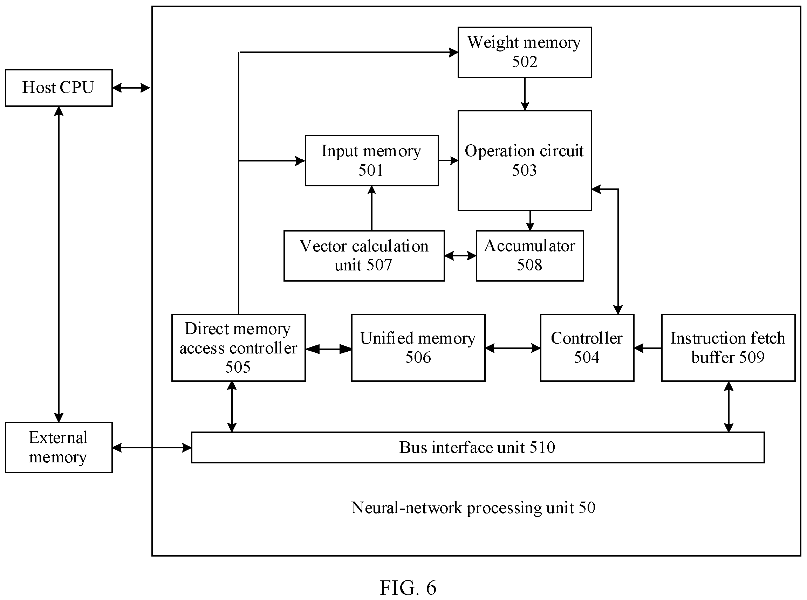

FIG. 6 is a schematic diagram of a hardware structure of a chip according to an embodiment of this application. The chip includes a neural-network processing unit 50. The chip may be disposed in the execution device 110 shown in FIG. 5, to complete the calculation work of the calculation module 111. The chip may alternatively be disposed in the training device 120 shown in FIG. 5, to complete training of the training device 120 and output the target model/rule 101. The method in this embodiment of this application may be implemented in the chip shown in FIG. 6.

The neural-network processing unit NPU 50 serves as a coprocessor, and may be disposed on a host central processing unit (central processing unit, CPU) (host CPU). The host CPU assigns a task. A core part of the NPU is an operation circuit 503, and a controller 504 controls the operation circuit 503 to extract data in a memory (a weight memory or an input memory) and perform an operation.

In some implementations, the operation circuit 503 includes a plurality of processing units (processing engine, PE). In some implementations, the operation circuit 503 is a two-dimensional systolic array. The operation circuit 503 may alternatively be a one-dimensional systolic array or another electronic circuit capable of performing mathematical operations such as multiplication and addition. In some implementations, the operation circuit 503 is a general-purpose matrix processor.

For example, it is assumed that there is an input matrix A, a weight matrix B, and an output matrix C. The operation circuit fetches, from a weight memory 502, data corresponding to the matrix B, and caches the data on each PE in the operation circuit. The operation circuit fetches data of the matrix A from an input memory 501, to perform a matrix operation on the matrix B, and stores an obtained partial result or an obtained final result of the matrix in an accumulator (accumulator) 508.

A vector calculation unit 507 may perform further processing on the output of the operation circuit, for example, vector multiplication, vector addition, exponential operation, logarithmic operation, and size comparison. For example, the vector calculation unit 507 may be configured to perform network calculation, such as pooling (pooling), batch normalization (batch normalization, BN), or local response normalization (local response normalization) at a non-convolutional/non-FC layer in a neural network.

In some implementations, the vector calculation unit 507 can store a processed output vector in a unified memory 506. For example, the vector calculation unit 507 may apply a non-linear function to the output, for example, a vector of an accumulated value, of the operation circuit 503, to generate an activation value. In some implementations, the vector calculation unit 507 generates a normalized value, a combined value, or both a normalized value and a combined value. In some implementations, the processed output vector can be used as an activation input to the operation circuit 503, for example, to be used in a subsequent layer in the neural network.

A unified memory 506 is configured to store input data and output data.

For weight data, a direct memory access controller (direct memory access controller, DMAC) 505 directly transfers input data in an external memory to the input memory 501 and/or the unified memory 506, stores weight data in the external memory in the weight memory 502, and stores data in the unified memory 506 in the external memory.

A bus interface unit (bus interface unit, BIU) 510 is configured to implement interaction between the host CPU, the DMAC, and an instruction fetch buffer 509 by using a bus.

The instruction fetch buffer (instruction fetch buffer) 509 connected to the controller 504 is configured to store instructions used by the controller 504.

The controller 504 is configured to invoke the instructions buffered in the instruction fetch buffer 509, to control a working process of the operation accelerator.

Usually, the unified memory 506, the input memory 501, the weight memory 502, and the instruction fetch buffer 509 each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

The execution device 110 in FIG. 5 or the chip in FIG. 6 described above can perform the steps of the data processing method in this embodiment of this application. The training device 120 in FIG. 5 or the chip in FIG. 6 described above can perform the steps of the neural network model training method in this embodiment of this application.

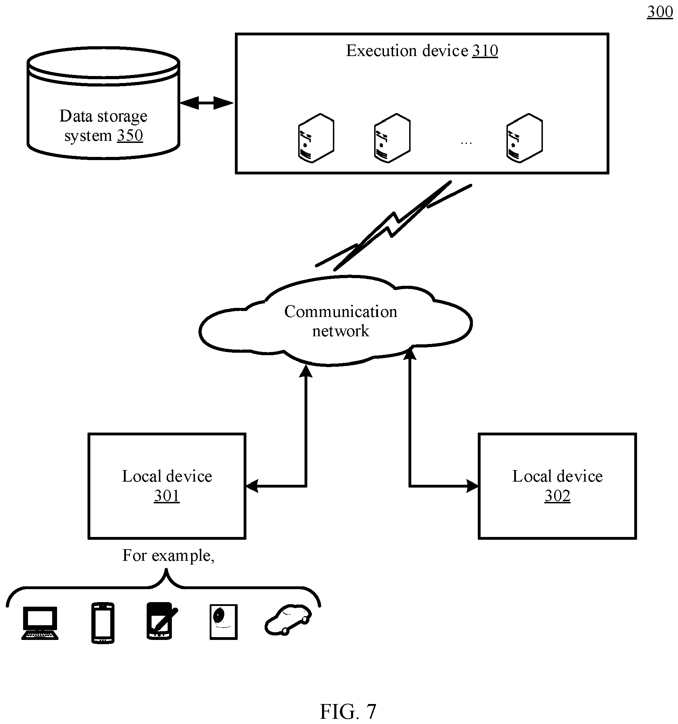

As shown in FIG. 7, an embodiment of this application provides a system architecture 300. The system architecture includes a local device 301, a local device 302, an execution device 310, and a data storage system 350. The local device 301 and the local device 302 are connected to the execution device 310 through a communication network.

The execution device 310 may be implemented by one or more servers. Optionally, the execution device 310 may cooperate with another computing device, for example, a device such as a data memory, a router, or a load balancer. The execution device 310 may be disposed on one physical site, or distributed on a plurality of physical sites. The execution device 310 may implement the neural network model training method in this embodiment of this application by using data in the data storage system 350 or by invoking program code in the data storage system 350.

Specifically, in an implementation, the execution device 110 may perform the following process:

obtaining a neural network model, where an activation function of the neural network model includes a piecewise linear function PWL, and the PWL includes a plurality of intervals;

training the neural network model based on training data and obtaining a target neural network model based on a trained neural network model, where the training data includes image data, audio data, or text data; and

processing the target neural network model to obtain a target neural network quantization model, where the target neural network quantization model includes a plurality of groups of fusion parameters, and there is a correspondence between the plurality of groups of fusion parameters and the plurality of intervals of the PWL in the target neural network model.

The execution device 110 can obtain one target neural network quantization model by using the foregoing process. The target neural network quantization model may be used for image classification, image processing, audio processing, text processing, or the like.

A user may operate user equipment (for example, the local device 301 and the local device 302) of the user to interact with the execution device 310. Each local device may be any computing device, such as a personal computer, a computer workstation, a smartphone, a tablet computer, an intelligent camera, a smart automobile, another type of cellular phone, a media consumption device, a wearable device, a set-top box, or a game console.

The local device of each user may interact with the execution device 310 through a communication network of any communication mechanism/communication standard. The communication network may be a wide area network, a local area network, a point-to-point connection, or any combination thereof.

In an implementation, the local device 301 and the local device 302 each obtain a related parameter of the target neural network model from the execution device 310, deploy the target neural network model on the local device 301 and the local device 302, and perform image classification, image processing, audio processing, text processing, or the like by using the target neural network model.

In another implementation, the target neural network model may be directly deployed on the execution device 310. The execution device 310 obtains to-be-processed data from the local device 301 and the local device 302, and processes the to-be-processed data by using the target neural network model.

Alternatively, the execution device 310 may be a cloud device. In this case, the execution device 310 may be deployed on a cloud. Alternatively, the execution device 310 may be a terminal device. In this case, the execution device 310 may be deployed on a user terminal side. This is not limited in this embodiment of this application.

As shown in FIG. 8, a PWL model is quantized to obtain a quantized PWL model, that is, the target neural network model in this embodiment of this application. The target neural network quantization model may be deployed on the execution device 610, to process input data provided by a user, to obtain a processing result. The PWL model is a neural network model in which a PWL is used as an activation function. The target neural network quantization model may be obtained by using the method in this embodiment of this application. The execution device 610 may be a terminal device or a cloud device. For example, the execution device 610 may be the execution device 110 in FIG. 5, the execution device 310 or the local device in FIG. 7, or the like.

An existing quantization training method is generally designed for a neural network model that uses a ReLU as an activation function, and cannot be applied to a neural network model that uses a more complex activation function. For the neural network model that uses the PWL as the activation function, that is, the PWL model, if quantization training is performed on the PWL model by using an existing method, in an obtained quantization model, only a convolution parameter and a parameter of a fully-connected layer that are of the model can be quantized, and a parameter of the PWL cannot be quantized. Specifically, in forward propagation of the quantization model, when the PWL is used as the activation function, before an output result of the convolution layer or the fully-connected layer is input to the activation function, a dequantization operation needs to be performed first, and then the activation function is used to process a result of the dequantization operation. As shown in (b) in FIG. 4, because the PWL is not a linear function, the dequantization operation before the activation function cannot be directly fused with a feature map quantization operation of a next layer. Therefore, the parameter of the PWL cannot be quantized, and the model cannot perform quantization inference. This affects inference efficiency of the model.

Therefore, how to improve inference efficiency of the neural network model in which the PWL is used as the activation function becomes an urgent problem to be resolved.

An embodiment of this application provides a data processing method, to improve inference efficiency of the neural network model in which the PWL is used as the activation function.

The following describes the method provided in this application from a model training side and a model application side.

According to the neural network model training method provided in this embodiment of this application, symbolized and formalized intelligent information modeling, extraction, preprocessing, and training are performed on training data (for example, image data, audio data, or text data in this application), to finally obtain a trained quantization model. In addition, in the data processing method provided in this embodiment of this application, the trained quantization model may be used, and input data (for example, to-be-processed image data, audio data, or text data in this application) is input into the trained quantization model, to obtain output data. To better describe the data processing method in this embodiment of this application, the following first describes the model training method.

The following describes in detail the neural network model training method in this embodiment of this application with reference to FIG. 9 to FIG. 11.

FIG. 9 shows a neural network model training method 900 according to an embodiment of this application. The method shown in FIG. 9 may be performed by a neural network model training apparatus. The apparatus may be a cloud service device, or may be a terminal device, for example, an apparatus having a computing capability sufficient to perform the neural network model training method, such as a computer or a server, or may be a system including a cloud service device and a terminal device. For example, the method 900 may be performed by the training device 120 in FIG. 5, the neural-network processing unit 50 in FIG. 6, and the execution device 310 or the local device in FIG. 7.

The method 900 may also be understood as a neural network model quantization training method.

The method 900 includes step S910 to step S930. The following describes step S910 to step S930 in detail.

S910: Obtain a neural network model, where an activation function of the neural network model includes a PWL, and the PWL includes a plurality of intervals.

In other words, the neural network model uses the PWL as the activation function. A neural network that uses the PWL as the activation function may also be referred to as a PWL model.

One PWL may include a plurality of demarcation points, and the plurality of demarcation points may divide a definition domain into a plurality of intervals. A smallest demarcation point in the plurality of demarcation points is a left boundary, and a largest demarcation point in the plurality of demarcation points is a right boundary. An intermediate interval is an interval between the left boundary and the right boundary in the plurality of intervals.

For example, if a definition domain of one PWL is $(-\infty, +\infty)$ and there are four boundary points, the definition domain is divided into five intervals by using the four points, three intervals are included between a left boundary and a right boundary in the four boundary points, and the three intervals are intermediate intervals.

For another example, if a definition domain of one PWL is $(-\infty, a]$ and there are four boundary points, a right boundary in the four boundary points is $a$, the definition domain is divided into four intervals by the four points, three intervals are included between a left boundary and the right boundary in the four boundary points, and the three intervals are intermediate intervals.

For still another example, if a definition domain of one PWL is [$a'$,$a$] and there are four boundary points, a right boundary in the four boundary points is $a$, and a left boundary is $a'$, the definition domain is divided into three intervals by the four points, three intervals are included between the left boundary and the right boundary in the four boundary points, and the three intervals are intermediate intervals.

One PWL may include one or more intermediate intervals. When one PWL includes a plurality of intermediate intervals, lengths of the plurality of intermediate intervals are the same. A quantity of intermediate intervals of one PWL may also be referred to as a quantity of segments of the PWL.

The activation function of the neural network model includes one or more PWLs. In other words, at least one activation function in the neural network model is the PWL.

If the neural network model includes the plurality of PWLs, parameters of the plurality of PWLs may be the same, that is, the plurality of PWLs may share the parameter. Alternatively, the parameters of the plurality of PWLs may be different, that is, the parameters of the plurality of PWLs may be independent of each other. In this case, a change of a parameter of one PWL in the plurality of PWLs does not affect a parameter of another PWL.

In this embodiment of this application, a same processing manner may be used for all PWLs in the model. For ease of description, only one PWL is used for description in this embodiment of this application, and the solution in this embodiment of this application is not limited.

S920: Train the neural network model based on training data to obtain a target neural network model.

The training data includes image data, audio data, or text data.

A type of the training data is related to a task of the model. For example, if the model is used for an image processing task, the training data may be an image. Specifically, the image processing task includes image classification, image detection, image segmentation, image generation, or the like. For another example, if the neural network model is used for a text processing task, the training data may be a text. Specifically, the text processing task includes text recognition, text translation, or the like. For another example, if the neural network model is used for an audio processing task, the training data may be audio data. Specifically, the audio processing task includes audio recognition and the like. The type of the training data is not limited in this embodiment of this application.

For example, the training data may be prestored. For example, the training data may be training data maintained in the database 130 shown in FIG. 5.

Alternatively, the training data may be input by a user. For example, the method 900 is performed by a device providing an AutoML service, and the training data may be input by the user.

S930: Process the target neural network model to obtain a target neural network quantization model. The target neural network quantization model includes a plurality of groups of fusion parameters, and there is a correspondence between the plurality of groups of fusion parameters and the plurality of intervals of the PWL in the target neural network model.

The processing the target neural network model may also be understood as performing quantization processing on the target neural network model.

In other words, quantization processing is performed on a parameter in the target neural network model. For example, quantization processing is performed on a weight parameter in the target neural network model, that is, a floating-point weight parameter is converted into an integer weight parameter. The integer weight parameter is the weight parameter in the target neural network model. Specifically, quantization processing may be performed on the parameter in the target neural network model based on a quantization parameter of the target neural network model.

Specifically, step S930 includes: fusing a quantization process and calculation of the PWL that are in a forward propagation process of the target neural network model, to obtain the target neural network quantization model. The quantization process includes a quantization operation, a dequantization operation, and the like.

Alternatively, step S930 includes: separately fusing, based on the plurality of intervals of the PWL, a quantized operation of a network layer, a dequantization operation, calculation of the PWL of the target neural network model, and a feature quantization operation of a next network layer that are sequentially performed in a forward propagation process of the target neural network model, to obtain the target neural network quantization model.

Parameters in the quantization process and parameters of the PWL are fused to obtain the plurality of groups of fusion parameters.

Optionally, the plurality of groups of fusion parameters are obtained based on parameters of the plurality of intervals of the PWL, the weight parameter, a weight quantization parameter in the quantization parameter, and a feature quantization parameter in the quantization parameter that are in the target neural network model.

Alternatively, step S930 includes: obtaining the plurality of groups of fusion parameters based on parameters of the plurality of intervals of the PWL in the target neural network model, a weight quantization parameter in the quantization parameter of the neural network model, and a feature quantization parameter in the quantization parameter, to obtain the target neural network quantization model.

Specifically, the plurality of groups of fusion parameters include a plurality of groups of fusion scaling parameters, and the fusion scaling parameter is determined based on at least one of the following: parameters of the plurality of intervals of the PWL in the target neural network model, a quantization parameter of a network layer before the PWL in the target neural network model, or a quantization parameter of a network layer after the PWL in the target neural network model.

Specifically, the plurality of groups of fusion parameters include a plurality of groups of fusion offset parameters, and the fusion offset parameter is determined based on at least one of the following: parameters of the plurality of intervals of the PWL in the target neural network model or a quantization parameter of a network layer after the PWL in the target neural network model.

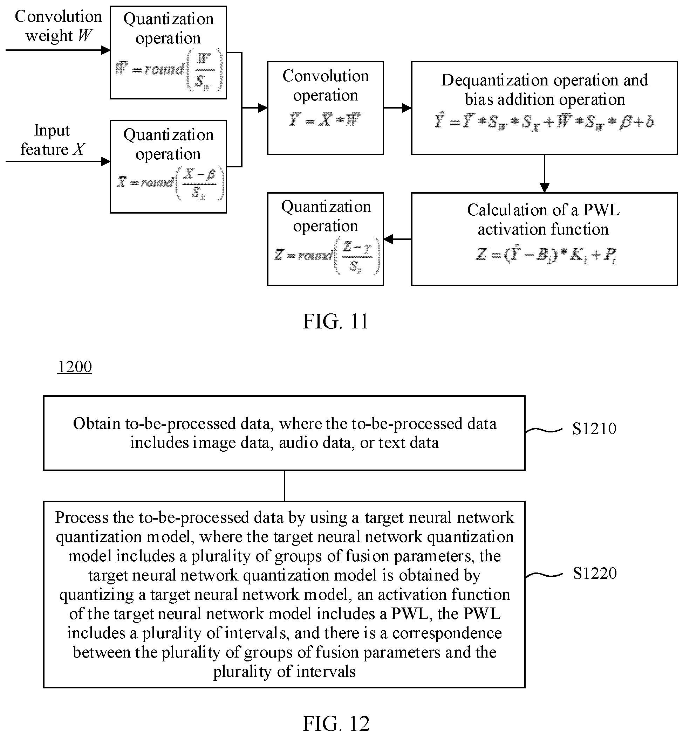

For a specific calculation manner, refer to the following description in FIG. 11.

The target neural network quantization model may be used to execute a target task. For example, the target task may be an image processing task, for example, target detection, image segmentation, instance segmentation, image denoising, or image super-resolution. Alternatively, the target task may be an audio processing task, for example, speech recognition. Alternatively, the target task may be a text processing task, for example, text recognition or text translation.

In an existing solution, only the weight parameter in the model in which the PWL is used as the activation function can be quantized, and the parameter of the PWL cannot be quantized. In this way, in an inference process, calculation of the activation function needs to be performed based on the parameter of the PWL. In other words, the model obtained by using the existing training solution cannot implement quantization inference.

According to the solution in this embodiment of this application, the target neural network model is processed to obtain the target neural network quantization model. The target neural network quantization model includes the plurality of groups of fusion parameters, so that the target neural network quantization model can process the to-be-processed data based on the plurality of groups of fusion parameters corresponding to the plurality of intervals of the PWL, which is equivalent to implement complete quantization of the target neural network model. Specifically, the quantization process and a calculation process of the PWL that are in the target neural network model are fused to obtain the plurality of groups of fusion parameters, so that a processing result is obtained based on the plurality of groups of fusion parameters in the inference process, and calculation of the PWL does not need to be additionally performed. This helps implement quantization inference of the model, reduce calculation workload, and improve processing efficiency. In terms of effect, the target neural network quantization model is completely quantized, that is, not only the weight parameter is quantized, but also the parameter of the PWL is quantized.

In addition, the target neural network quantization model is obtained by fusing the quantization process and the calculation process of the PWL that are in the target neural network model, so that inference precision of the target neural network quantization model can theoretically be consistent with that of the target neural network model.

In an implementation, the neural network model in step S920 may be a full-precision neural network model.

The full-precision neural network model is a model obtained through training based on a floating-point type (generally, single-precision) parameter. In other words, the full-precision neural network model is a trained model. The full-precision neural network model is a floating-point model. The floating-point model is a model whose parameter is of a floating-point type. In other words, an initial neural network model is trained based on data of the floating-point type, to obtain the full-precision neural network model.

In this case, step S920 may include: inserting a quantization operation and a dequantization operation into the full-precision neural network model, and performing quantization training, to obtain a neural network model obtained after quantization training and a quantization parameter. The neural network model obtained after quantization training is used as the target neural network model.

Specifically, in the quantization training process, a weight parameter and a quantization training parameter in the full-precision neural network model are adjusted based on the training data. The quantization training parameter is a parameter related in the quantization operation and the dequantization operation in the quantization training process. Specifically, the quantization training parameter includes a weight quantization training parameter and a feature quantization training parameter that are of the model. In the quantization training process, the weight parameter in the full-precision neural network model is quantized based on the quantization training parameter, and an input feature is quantized based on the feature quantization training parameter. In addition, a dequantization operation is performed, based on the quantization training parameter, on data on which the dequantization operation needs to be performed. A quantization training parameter obtained after quantization training is completed is the quantization parameter.

For example, in step S920, quantization training may be performed by using an existing solution. For example, quantization training may be performed on the full-precision neural network model by using a quantization training method based on a uniform quantization solution, such as quantization aware training (quantification aware training, QAT) or LSQ, to obtain the neural network model obtained through quantization training and the quantization parameter.

In another implementation, the neural network model in step S920 is the neural network model obtained after quantization training in the foregoing implementation.

In other words, the neural network model is obtained, through quantization training, by inserting the quantization operation and the dequantization operation into the full-precision neural network model. The quantization parameter of the neural network model is also obtained through training in this process.

For example, the obtaining the neural network model may be: receiving a neural network model from another device. In other words, another device may perform quantization training on the full-precision neural network model, to obtain the neural network model. Alternatively, the obtaining the neural network model may be: performing quantization training on the full-precision neural network model to obtain the neural network model. A manner of obtaining the neural network model is not limited in this embodiment of this application.

The quantization parameter includes the weight quantization parameter and the feature quantization parameter. The weight quantization parameter is used to quantize a weight parameter in the model to obtain a quantized weight parameter. The feature quantization parameter is used to quantize an input feature to obtain a quantized feature.

Weight quantization parameters of different network layers in the neural network model may be the same or may be different. Feature quantization parameters of different network layers in one model may be the same or may be different.

For example, a weight quantization parameter of a network layer 1# is used to quantize a weight parameter of the network layer 1#. A feature quantization parameter of the network layer 1# is used to quantize an input feature of the network layer 1#.

The weight parameter may include a weight parameter of a convolution layer and/or a weight parameter of a fully-connected layer.

In other words, if the neural network model includes a convolution layer, the weight parameter includes a parameter of the convolution layer.

If the neural network model includes a fully-connected layer, the weight parameter includes a parameter of the fully-connected layer.

Optionally, step S920 includes step S921 and step S922.

S921: Train the neural network model based on the training data.

S922: Adjust a length of an intermediate interval of a PWL in the trained neural network model to obtain an adjusted neural network model.

The target neural network model may be obtained based on the adjusted target neural network model.

For example, the adjusted target network model is used as the target neural network model.

It should be noted that, in an execution process of step S921 and step S922, the quantization parameter remains unchanged, and the quantization parameter of the neural network model is substantially the same as the quantization parameter of the target neural network model.

In a possible implementation, an execution sequence of step S921 and step S922 may be exchanged, that is: adjusting a length of an intermediate interval of a PWL in the neural network model; and training an adjusted neural network model based on the training data.

Further, the adjusted neural network model obtained in step S922 is used as the neural network model in step S921, and step S921 and step S922 are repeatedly performed until the target neural network model is obtained.

According to the solution in this embodiment of this application, the length of the intermediate interval can be adjusted, to obtain a length of an intermediate interval that meets a requirement, thereby improving flexibility of the model. In addition, the model is trained, thereby ensuring precision of the model.

It should be noted that, because execution sequences of the steps are different, the model in step S921 may be the adjusted neural network model in S922, or may be the neural network model obtained in step S910. The following uses only an example in which the model in step S921 is the neural network model obtained in step S910 for description, and constitutes no limitation on the solution in this embodiment of this application.

The neural network model is trained based on the training data, that is, the parameter in the neural network model is adjusted based on the training data. Specifically, in the training process, forward propagation of the neural network model is performed based on the training data to obtain a loss function value, and then back propagation is performed based on the loss function value, that is, a gradient of a model parameter is calculated, and the model parameter is adjusted based on the gradient of the model parameter.

For example, the model parameter may include a model weight parameter and a parameter of the PWL.

For example, the parameter of the PWL may include at least one of the following: a right boundary, a left boundary, a slope of an interval with a maximum definition domain, a slope of an interval with a minimum definition domain, or a function value corresponding to a demarcation point.

For example, as shown in FIG. 11, in a process of performing forward propagation of the neural network model, a weight parameter and an input feature of a current network layer are quantized based on the quantization parameter, an operation, for example, a convolution operation, of the current network layer is performed based on a quantized weight parameter and a quantized input feature, an operation result of the current network layer is dequantized, an activation function value of a result of the dequantization operation is calculated, and the activation function value is quantized as a quantized input feature of a next network layer.

A quantity of iterations in the training process may be one or more.

Optionally, step S922 includes step S1 to step S3.

It should be noted that, because execution sequences of steps are different, the model in step S922, or the model in step S1 to step S3 may be the trained neural network model in S921, or may be the neural network model obtained in step S910. The following uses only an example in which the model in step S922 is the trained neural network model for description, and constitutes no limitation on the solution in this embodiment of this application.

S1: Calculate an equivalent length of an intermediate interval of the PWL based on the quantization parameter of the neural network model.

For one PWL, the calculating the equivalent length of the intermediate interval of the PWL based on the quantization parameter refers to calculating an equivalent length of an intermediate interval of the PWL based on a quantization parameter of a target network layer. The target network layer has a correspondence with the PWL. In other words, the PWL is a PWL corresponding to the target network layer. The PWL may be located at the target network layer. Alternatively, the PWL may be located after the target network layer, and the target network layer is adjacent to the PWL in the trained neural network model.

If an output result of one network layer is input into one PWL, the network layer is a network layer before adjacent to the PWL.

For example, an output result of a convolution layer 1# is input to an activation function for processing, the activation function is a PWL, and a result obtained through calculation by using the activation function is output to a convolution layer 2#. In this case, an equivalent length of an intermediate interval of the PWL is calculated based on a weight quantization parameter and a feature quantization parameter that are of the convolution layer 1#.

Specifically, the equivalent length of the intermediate interval is obtained by dividing the length of the intermediate interval by the quantization parameter.

In other words, the equivalent length of the intermediate interval is determined based on a parameter related to the length of the intermediate interval and the quantization parameter.

For example, the equivalent length $\bar{d}$ of the intermediate interval meets the following formula:

$$\bar{d} = \frac{d}{S_W \cdot S_X},$$

where $d$ represents the length of the intermediate interval, $S_W$ represents a weight quantization parameter of the target network layer, and $S_X$ represents a feature quantization parameter of the target network layer.

The length d of the intermediate interval meets the following formula:

$$d = \frac{RB - LB}{N},$$

where RB represents a right boundary of the PWL, LB represents a left boundary of the PWL, and N represents a quantity of intermediate intervals of the PWL.

Therefore, the equivalent length $\bar{d}$ of the intermediate interval may meet the following formula:

$$\bar{d} = \frac{RB - LB}{N \cdot S_W \cdot S_X}.$$

S2: Determine a target scaling coefficient of the PWL based on the equivalent length of the intermediate interval.

Specifically, the target scaling coefficient is determined based on the equivalent length of the intermediate interval and a target length.

The target length may be set as required.

Optionally, the target length is an integer power of 2 that is closest to the equivalent length of the intermediate interval.

The integer power of 2 that is closest to the equivalent length of the intermediate interval meets the following formula:

$$d' = 2^{\lfloor \log_2 \bar{d} \rfloor},$$

where d' represents the integer power of 2 that is closest to the equivalent length of the intermediate interval, and ⌊ ⌋ represents a rounding down operation.

Optionally, the target scaling coefficient is a scaling coefficient. The scaling coefficient is determined based on the equivalent length of the intermediate interval and the integer power of 2 that is closest to the equivalent length of the intermediate interval.

For example, the scaling coefficient is a quotient of the integer power of 2 that is closest to the equivalent length of the intermediate interval and the equivalent length of the intermediate interval, that is, the scaling coefficient is obtained by dividing the integer power of 2 that is closest to the equivalent length of the intermediate interval by the equivalent length of the intermediate interval.

For example, the scaling coefficient may meet the following formula:

$$s = \frac{d'}{\overline{d}},$$

where s represents the scaling coefficient.

For another example, the scaling coefficient is a quotient of the equivalent length of the intermediate interval and the integer power of 2 that is closest to the equivalent length of the intermediate interval, that is, the scaling coefficient is obtained by dividing the equivalent length of the intermediate interval by the integer power of 2 that is closest to the equivalent length of the intermediate interval.

Optionally, when the scaling coefficient is within a target range, the target scaling coefficient is the scaling coefficient; or when the scaling coefficient is outside the target range, the target scaling coefficient is a boundary value of the target range.

In other words, the target scaling coefficient is within the target range. The target range may be set as required.

For example, when the scaling coefficient is less than a first boundary value and greater than a second boundary value, the target scaling coefficient is the scaling coefficient; when the scaling coefficient is greater than or equal to the first boundary value, the target scaling coefficient is the first boundary value; or when the scaling coefficient is less than or equal to the second boundary value, the target scaling coefficient is the second boundary value, and the first boundary value is greater than the second boundary value.

For example, the scaling coefficient is constrained to obtain the target scaling coefficient. The target scaling coefficient may meet the following formula:

$$s' = clip(s, low, high),$$

where s' represents the target scaling coefficient, low represents the second boundary value, high represents the first boundary value, and clip () represents that when s<low, a value of low is returned, and when s>high, a value of high is returned; otherwise, a value of s is returned, low and high are hyperparameters, and are used to constrain a range of the target scaling coefficient, that is, constrain the target scaling coefficient within the target range. The values of high and low can be close to 1. For example, high=1.01 and low=0.99. This is not limited in embodiments of this application.

The neural network model usually includes two types of parameters. One type is a parameter that can be obtained by learning and estimating from the training data, that is, a trainable parameter, for example, a weight of the neural network model. The other type is a parameter, namely, a hyperparameter, that cannot be obtained from the training data. The hyperparameter may be manually set, or may be obtained by performing hyperparameter search through AutoML.

The trainable parameter may be updated based on the training data in the training process of the neural network model. The hyperparameter remains unchanged in an iteration process during training of the neural network model.

Alternatively, when the scaling coefficient is less than the first boundary value, the target scaling coefficient is the scaling coefficient; or when the scaling coefficient is greater than or equal to the first boundary value, the target scaling coefficient is the first boundary value.

Alternatively, when the scaling coefficient is greater than the second boundary value, the target scaling coefficient is the scaling coefficient; or when the scaling coefficient is less than or equal to the second boundary value, the target scaling coefficient is the second boundary value.

S3: Adjust, based on the target scaling coefficient of the PWL in the trained neural network model, a parameter of the target network layer in the trained neural network model and a length of an intermediate interval of the PWL.

The PWL in the trained neural network is a PWL corresponding to the target network layer. The PWL in the trained neural network model may be located at the target network layer. Alternatively, the PWL in the trained neural network may be located after the target network layer, and the target network layer is adjacent to the PWL in the trained neural network model.

The adjusting the parameter of the target network layer and the length of the intermediate interval of the PWL based on the target scaling coefficient may also be understood as performing scaling processing on the parameter of the target network layer and the length of the intermediate interval of the PWL based on the target scaling coefficient.

For example, the performing scaling processing on the length of the intermediate interval of the PWL includes: performing scaling processing on the left boundary and the right boundary of the PWL, to obtain a neural network model obtained after scaling processing.

A specific manner of scaling processing is related to a calculation manner of the target scaling coefficient.

The following describes step S3 by using an example in which the scaling coefficient is the quotient of the integer power of 2 that is closest to the equivalent length of the intermediate interval and the equivalent length of the intermediate interval.

In this case, the performing scaling processing on the parameter of the target network layer includes: dividing the parameter of the target network layer by the target scaling coefficient, to obtain a parameter, of a network layer, obtained after scaling processing.

For example, the parameter, of the network layer, obtained after scaling processing meets the following formula:

$$w' = \frac{w}{s'},$$

and

$$b' = \frac{b}{s'},$$

where *w'* represents a weight parameter, of the network layer, obtained after scaling processing, w represents a weight parameter of the network layer before scaling processing, *b'* represents a bias parameter, of the network layer, obtained after scaling processing, and b represents a bias parameter of the network layer before scaling processing.

The performing scaling processing on the left boundary and the right boundary of the PWL includes: separately multiplying the left boundary and the right boundary of the PWL by the target scaling coefficient to obtain a left boundary and a right boundary, of the PWL, obtained after scaling processing.

For example, the left boundary and the right boundary, of the PWL, obtained after scaling processing may meet the following formula:

$$LB' = LB \cdot s',$$

and

$$RB' = RB \cdot s',$$

where *LB'* represents the left boundary, of the PWL, obtained after scaling processing, LB represents the left boundary of the PWL before scaling processing, *RB'* represents the right boundary, of the PWL, obtained after scaling processing, and RB represents the right boundary of the PWL before scaling processing.

If the scaling coefficient is the quotient of the equivalent length scaling coefficient of the intermediate interval and the integer power of 2 that is closest to the equivalent length of the intermediate interval, the performing scaling processing on the parameter of the target network layer includes: multiplying the parameter of the target network layer by the target scaling coefficient. The performing scaling processing on the left boundary and the right boundary of the PWL includes: separately dividing the left boundary and the right boundary of the PWL by the target scaling coefficient to obtain a left boundary and a right boundary, of the PWL, obtained after scaling processing.

As described above, in an implementation, the neural network model obtained after scaling processing obtained in step S922 may be used as the neural network model in step S921, and step S921 and step S922 are repeatedly performed until training is completed or until a training termination condition is met. After training is completed, the trained neural network model, that is, the target neural network model, is obtained.

In the training process of step S921, iteration may be performed for T times, and in each iteration process, forward propagation, back propagation, and parameter update are performed based on an adjusted model parameter obtained after a previous iteration.

In other words, a model obtained after iteration for T times may be used as the model in step S922.

T is a positive integer. T is a hyperparameter, and a specific value of T may be set as required. For example, an order of magnitude of T may be hundreds, thousands, or the like. For example, T=300.

The training termination condition can be set as required.

For example, the training termination condition includes that a quantity of iterations is greater than or equal to a target quantity of iterations. When a current quantity of iterations is greater than or equal to the target quantity of iterations, training is terminated to obtain the target neural network model.

Alternatively, the training termination condition includes that precision of the model is greater than or equal to target precision. When precision of a current model is greater than or equal to the target precision, training is terminated to obtain the target neural network model.

Alternatively, the training termination condition includes that a variation of precision of the model obtained through a plurality of consecutive iterations is less than or equal to a target variation. In other words, after the precision of the model tends to be stable, training is terminated to obtain the target neural network model.

Whether the training termination condition is met may be determined in a process of step S921, or may be determined after step S921, or may be determined after step S922. This is not limited in this embodiment of this application.

For example, after step S921 is performed, whether the training termination condition is met is determined, and if the training termination condition is met, a current model is output as the target neural network model. If the training termination condition is not met, step S922 continues to be performed.

Alternatively, after each iteration in step S921 is performed, whether the training termination condition is met is determined, and if the training termination condition is met, a current model is output as the target neural network model. If the training termination condition is not met, iteration continues to be performed until T times are reached, and step S922 is performed.

Alternatively, after step S922 is performed, whether the training termination condition is met is determined, and if the training termination condition is met, a current model is output as the target neural network model. If the training termination condition is not met, step S921 continues to be performed.

According to the solution in this embodiment of this application, the neural network model is trained, and the boundary and the weight of the PWL are continuously adjusted, so that the equivalent length of the intermediate interval of the PWL is continuously close to the integer power of 2, and finally the equivalent length of the intermediate interval of the PWL is constrained to the integer power of 2, thereby implementing quantization of the parameter of the PWL. In this way, in a subsequent quantization inference process of the model, an index of a target interval may be obtained through shift (shift). It should be noted that "shift" in this embodiment of this application may also be referred to as "displacement". Specifically, shifting data to the right by one bit is equivalent to an operation of dividing by 2. If the equivalent length of the intermediate interval is $2^n$, when the index of the target interval is calculated, an operation of dividing by $2^n$ needs to be performed, and the operation can be implemented by shifting n bits, thereby avoiding performing the division operation by using a divider. No divider needs to be disposed in hardware, so that costs can be reduced. In addition, compared with the divider, the index of the target interval is obtained through shift, which can reduce calculation workload, reduce power consumption overheads, and improve inference efficiency. In addition, the model is trained to ensure precision of the model.

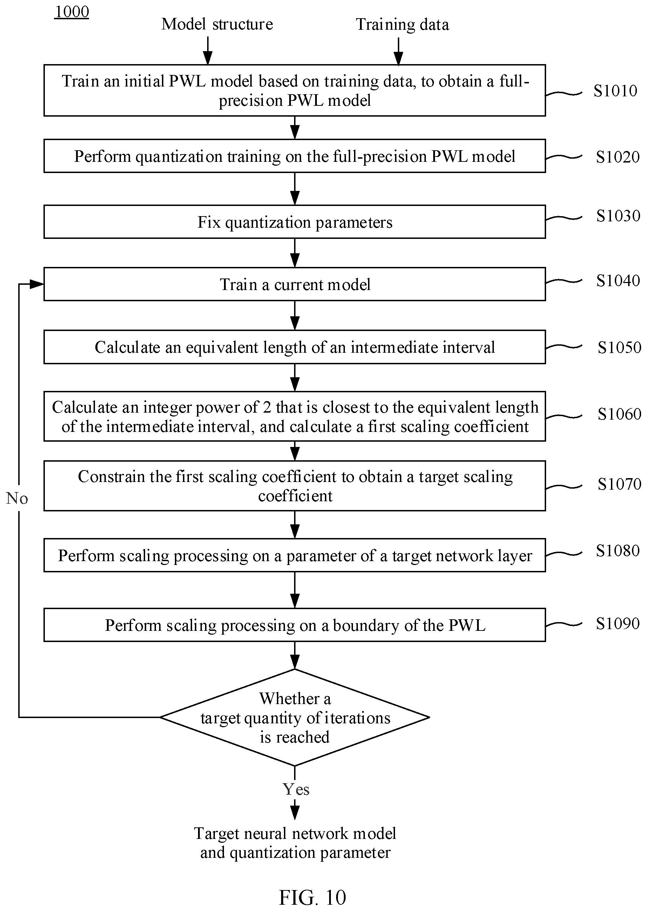

FIG. 10 shows a neural network model training method 1000 according to an embodiment of this application. The method 1000 may be considered as a specific implementation of step S920. For a specific description, refer to the description in step S920. To avoid repetition, some descriptions are appropriately omitted when the method 1000 is described.

The method 1000 includes step S1010 to step S1030.

S1010: Train an initial PWL model based on training data, to obtain a full-precision PWL model.

An activation function of the initial PWL model includes a PWL.

Specifically, a training apparatus may obtain a model structure and training data of the initial PWL model, and perform a training process to obtain the full-precision PWL model. For example, the full-precision PWL model may be a 32-bit floating-point model.

Step S1010 is an optional step. For example, the training apparatus may receive a full-precision PWL model from another device.

S1020: Perform quantization training on the full-precision PWL model.

A model obtained in step S 1020 may be used as the neural network model in step S920.

For example, quantization training may be performed on the full-precision PWL model by using a quantization training method based on a uniform quantization solution, such as QAT or LSQ.

Step S1020 is an optional step. For example, the training apparatus may receive, from another device, a PWL model obtained through quantization training.

S1030: Fix quantization parameters $S_X$, $S_W$, and $\beta$.

In the quantization training process in step S1020, a quantization parameter and a parameter of the model are adjusted, and in step S1030 to step S 1090, the quantization parameter remains unchanged.

S1040: Train a current model.

Specifically, forward propagation, back propagation, and parameter update are performed on the current model based on the training data.

In the training process, step S1050 to step S1090 are performed on each PWL in the model at an interval of T iterations. T is a positive integer. For example, T=300.

S1050: Calculate an equivalent length of an intermediate interval.

The equivalent length $\bar{d}$ of the intermediate interval meets the following formula:

$$\bar{d} = \frac{RB - LB}{N \cdot S_W \cdot S_X}.$$

S 1060: Calculate an integer power of 2 that is closest to the equivalent length of the intermediate interval, and calculate a scaling coefficient.

The scaling coefficient meets the following formula:

$$s = \frac{d'}{\bar{d}},$$

where $d'$ represents the integer power of 2 that is closest to the equivalent length of the intermediate interval, and s represents the scaling coefficient

S1070: Constrain the scaling coefficient to obtain a target scaling coefficient.

The target scaling coefficient s' meets the following formula:

$$s' = clip(s, low, high),$$

where Values of high and low can be close to 1. For example, high=1.01 and low=0.99.

S1080: Perform scaling processing on a parameter of a target network layer.

A parameter, of a network layer, obtained after scaling processing meets the following formula:

$$w' = \frac{w}{s'},$$

and

$$b' = \frac{b}{s'},$$

where $w'$ represents a weight parameter, of the network layer, obtained after scaling processing, w represents a weight parameter of the network layer before scaling processing, $b'$ represents a bias parameter, of the network layer, obtained after scaling processing, and b represents a bias parameter of the network layer before scaling processing.

S1090: Perform scaling processing on a boundary of the PWL.

A left boundary and a right boundary, of the PWL, obtained after scaling processing may meet the following formula:

$$LB' = LB \cdot s',$$

and

$$RB' = RB \cdot s',$$

where LB ' represents the left boundary, of the PWL, obtained after scaling processing, LB represents the left boundary of the PWL before scaling processing, *RB*' represents the right boundary, of the PWL, obtained after scaling processing, and RB represents the right boundary of the PWL before scaling processing.

Whether a training termination condition is met is determined, and if the training termination condition is met, training is completed to obtain a target neural network model and a quantization parameter. If the training termination condition is not met, step S 1040 continues to be performed.

For example, the training termination condition may include that a current quantity of iterations reaches a target quantity of iterations.

As shown in FIG. 10, whether the current quantity of iterations reaches the target quantity of iterations is determined. If the target quantity of iterations is reached, training is completed to obtain the target neural network model and the quantization parameter. Otherwise, step S 1040 continues to be performed.

It should be understood that the training termination condition in FIG. 10 is merely an example, and another training termination condition may be further set. For a specific description, refer to the description in step S920. Details are not described herein again.

According to the solution in this embodiment of this application, quantization training is performed on the full-precision PWL model to obtain a quantized weight, and then the boundary of the PWL and the weight parameter of the model are continuously adjusted, so that the equivalent length of the intermediate interval of the PWL is continuously close to the integer power of 2, and finally the equivalent length of the intermediate interval of the PWL is constrained to the integer power of 2, thereby implementing quantization of the parameter of the PWL. In this way, in a subsequent quantization inference process of the model, an index of the intermediate interval may be obtained through shift, so that a division operation is avoided, and a divider does not need to be disposed in hardware, and costs can be reduced. In addition, compared with the divider, the index of the target interval is obtained through shift, which can reduce calculation workload, reduce power consumption overheads, and improve inference efficiency.

FIG. 11 is a schematic flowchart of a forward propagation process of a quantization training process of a PWL model. In FIG. 11, only an example in which a current network layer is a convolution layer is used for description, and a type of a network layer in the PWL model is not limited. The PWL model in FIG. 11 may be the target neural network model obtained in step S920 or the model obtained through training by using the method 1000, or may be a model obtained through training by using another training method. This is not limited in this application.

As shown in FIG. 11, a forward propagation process of the current network layer includes the following steps.

(1) Quantize an input feature X of the current network layer to obtain a quantized input feature map $\overline{X}$ of the current network layer, and quantize a weight parameter W of the current network layer to obtain a quantized weight parameter $\overline{W}$ of the current network layer. The current network layer in FIG. 11 is the convolution layer, and W may also be referred to as a convolution weight parameter.

For example, the quantized input feature map $\overline{X}$ of the current network layer may meet the following formula:

$$\overline{X} = round\left(\frac{X}{S_X}\right),$$

where $S_X$ is a feature quantization parameter of the current network layer, and may be determined by using an existing quantization training method, for example, LSQ. round() indicates that an integer closest to a value in the bracket is calculated.

Alternatively, the quantized input feature $\overline{X}$ of the current network layer may meet the following formula:

$$\overline{X} = round\left(\frac{X - \beta}{S_X}\right),$$

where $\beta$ and $S_X$ are feature quantization parameters of the current network layer, and may be determined by using an existing quantization training method, for example, LSQ. For ease of description, in this embodiment of this application, only this manner is used as an example to describe a quantization inference process. If $\beta$ is not set in the quantization process, a value of $\beta$ in the following is set to 0.

For example, the quantized weight parameter $\overline{W}$ of the current network layer may meet the following formula:

$$\overline{W} = round\left(\frac{W}{S_W}\right),$$

where $S_W$ is a weight quantization parameter of the current network layer, and may be determined by using an existing quantization training method, for example, LSQ.

(2) Perform a convolution operation based on the quantized weight parameter $\overline{W}$ of the current network layer and the quantized input feature $\overline{X}$, to obtain a result $\overline{Y}$ of the convolution operation.

For example, a result $\overline{Y}$ of the convolution operation may meet the following formula:

$$\overline{Y} = \overline{X} * \overline{W} .$$

It should be understood that in this embodiment of this application, * represents a matrix multiplication operation or a convolution operation. For example, if the current network layer is a convolution layer, * represents the convolution operation; or if the current network layer is a fully-connected layer, * represents the matrix multiplication operation.

(3) Perform a dequantization operation and a convolution addition bias operation on the result of the convolution operation, to obtain an operation result $\hat{Y}$.

For example, the operation result $\hat{Y}$ meets the following formula:

$$\hat{Y} = \overline{Y} * S_W * S_X + \overline{W} * S_W * \beta + b ,$$

where b represents a bias of the current network layer. If the current network layer is a convolution layer, b is a convolution bias.

It should be noted that, if no convolution bias is set at the current network layer, step (3) may include: performing a dequantization operation on the result of the convolution operation, to obtain the operation result $\hat{Y}$.

(4) Process the operation result $\hat{Y}$ obtained in step (3) by using the PWL activation function, where a processing result is an input feature Z of a next network layer.

For example, the input feature Z of the next network layer meets the following formula:

$$Z = (\hat{Y} - B_i) * K_i + P_i ,$$

where $B_i$ represents a left endpoint of an $i^{th}$ interval in the PWL, $K_i$ represents a slope of the $i^{th}$ interval in the PWL, and $P_i$ represents a function value corresponding to the left endpoint of the $i^{th}$ interval in the PWL.

It should be noted that, the formula is merely an example, and a processing result of the PWL may be obtained by using a formula in another form. For example, $K_i$ is represented as a calculation result of another parameter in the PWL. In this embodiment of this application, only the formula in the foregoing form is used as an example for description, and does not constitute a limitation on the solution in this embodiment of this application.

(5) Quantize the input feature Z of the next network layer, to obtain a quantized input feature $\overline{Z}$ of the next network layer.

For example, the quantized input feature $\overline{Z}$ of the next network layer meets the following formula:

$$\overline{Z} = round\left(\frac{Z}{S_Z}\right),$$

where $S_Z$ is a feature quantization parameter of the next network layer, and may be determined by using an existing quantization training method, for example, LSQ.

Alternatively, the quantized input feature $\overline{Z}$ of the next network layer may meet the following formula:

$$\overline{Z} = round\left(\frac{Z - \gamma}{S_Z}\right),$$

where $\gamma$ and $S_Z$ are feature quantization parameters of the next network layer, and may be determined by using an existing quantization training method, for example, LSQ. For ease of description, in this embodiment of this application, only this manner is used as an example to describe a quantization inference process. If $\gamma$ is not set in the quantization process, a value of $\gamma$ in the following is set to 0.

As shown in FIG. 11, in the forward propagation process, before an output result of the network layer is input to the PWL, a dequantization operation needs to be performed on the output result of the network layer, and then the PWL is used to process a result of the dequantization operation. In this process, a large quantity of floating-point operations need to be performed, and calculation workload is large.

The convolution operation, the dequantization operation, and the quantization operation in FIG. 11 are all linear operations, and the PWL is a linear operation in each interval. Therefore, in this embodiment of this application, a weight parameter in a PWL model obtained after quantization training is quantized based on the weight quantization parameter, and a quantized operation of the network layer, a dequantization operation, a calculation process of the PWL, and a feature quantization operation of the next network layer that are sequentially performed in the forward propagation process of the target neural network model are fused, to obtain the target neural network quantization model. Alternatively, it may be understood that the weight parameter of the network layer, the quantization parameter, a parameter of the PWL, and a quantization parameter of the next network layer are separately fused based on a plurality of intervals of the PWL, to obtain the target neural network quantization model.

The following describes a fusion process of the quantized operation of the network layer, the dequantization operation, the calculation process of the PWL, and the feature quantization operation of the next network layer that are sequentially performed in the forward propagation process of the target neural network model in FIG. 11.

As shown above, the quantized input feature $\overline{Z}$ of the next network layer may meet the following formula:

$$\overline{Z} = round\left(\frac{Z - \gamma}{S_Z}\right).$$

Therefore, it can be learned that the quantized input feature map $\overline{Z}$ of the next network layer may meet the following formula:

$$
\begin{aligned}
\overline{Z} &= round\left(\frac{((\overline{X}*\overline{W}*S_W*S_X + \beta*\overline{W}*S_W + b - B_i)*K_i + P_i - \gamma)}{S_Z}\right) \\
&= round\left(\overline{X}*\overline{W}*\frac{S_X*S_W*K_i}{S_Z} + \frac{(\beta*\overline{W}*S_W + b - B_i)*K_i + P_i - \gamma}{S_Z}\right) \\
&= round\left((\overline{X}*\overline{W} - bias)*\frac{S_X*S_W*K_i}{S_Z} + \frac{(\beta*\overline{W}*S_W + b - B_i)*K_i + P_i - \gamma + bias*S_X*S_W*K_i}{S_Z}\right) \\
&= round\left((\overline{X}*\overline{W} - bias)*\frac{S_X*S_W*K_i}{S_Z} + \frac{(\beta*\overline{W}*S_W + b - B_i + bias*S_X*S_W)*K_i + P_i - \gamma}{S_Z}\right) \\
&= round\left(\left\lfloor(\overline{X}*\overline{W} - bias)*\frac{S_X*S_W*K_i}{S_Z} + \frac{(\beta*\overline{W}*S_W + b - B_i + LB - \overline{W}*S_W*\beta - b)*K_i + P_i - \gamma}{S_Z}\right\rfloor\right) \\
&= round\left((\overline{X}*\overline{W} - bias)*\frac{S_X*S_W*K_i}{S_Z} + \frac{(LB - B_i)*K_i + P_i - \gamma}{S_Z}\right) \\
&= round\left((\overline{X}*\overline{W} - bias)*scale_i + offset_i\right)
\end{aligned}
$$
,

where bias represents a fused bias, $scale_i$ represents a fusion scaling parameter of the $i^{th}$ interval, and $offset_i$ represents a fusion offset parameter of the $i^{th}$ interval.

bias meets the following formula:

$$bias = \frac{LB - \overline{W} * S_W * \beta - b}{S_W * S_X}.$$

*scale_i* meets the following formula:

$$scale_i = \frac{S_X * S_W * K_i}{S_Z}.$$

*offset,* meets the following formula:

$$offset_i = \frac{(LB - B_i) * K_i + P_i - \gamma}{S_Z}.$$

A manner of determining an interval to which data input into the PWL belongs may be set as required.

For example, the data input into the PWL is compared with a value of each demarcation point of the PWL, and the interval to which the data input into the PWL belongs is determined based on a comparison result.

Specifically, the interval to which the data input into the PWL belongs is an interval between two demarcation points that are closest to the data input into the PWL.

Alternatively, when lengths of intermediate intervals of the PWL are the same, the length may be determined by using a distance between the data input into the PWL and a left boundary. Alternatively, the length may be determined by using a distance between the data input to the PWL and a right boundary.

For example, an index i of the interval to which the data input into the PWL belongs meets the following formula:

$$i = round\left(\frac{\hat{Y} - LB}{d}\right).$$

Therefore, it can be learned that the number i of the interval to which the data input into the PWL belongs meets the following formula:

$$
\begin{aligned}
i &= round\left(\frac{\hat{Y} - LB}{d}\right) \\
&= round\left(\frac{\overline{Y} * S_X * S_W + \beta * \overline{W} * S_W + b - LB}{d}\right) \\
&= round\left(\frac{\overline{X} * \overline{W} * S_X * S_W + \beta * \overline{W} * S_W + b - LB}{d}\right). \\
&= round\left(\frac{\overline{X} * \overline{W} - (LB - \beta * \overline{W} * S_W - b) / S_W * S_X}{d / S_W * S_X}\right) \\
&= round\left(\frac{\overline{X} * \overline{W} - bias}{\overline{d}}\right)
\end{aligned}
$$

$\overline{d}$ meets the following formula:

$$\overline{d} = \frac{d}{S_W * S_X}.$$

Further, an equivalent length of an intermediate interval of the PWL in the trained PWL model is an integer power of 2. In this way, when i is calculated, an operation of dividing by the equivalent length of the intermediate interval may be implemented through shift, thereby avoiding performing a division operation by using a divider. No divider needs to be disposed in hardware, so that costs can be reduced. In addition, compared with the divider, the index of the target interval is obtained through shift, which can reduce calculation workload, reduce power consumption overheads, and improve inference efficiency.

In this embodiment of this application, bias, $scale_i$, and $offset_i$ are pre-stored before quantization inference starts. In the quantization inference process, a corresponding parameter may be selected based on the index i of the target interval, and a calculation process of the PWL does not need to be additionally performed, thereby reducing calculation workload, implementing complete quantization inference of the PWL model, and improving inference efficiency.

It should be understood that the foregoing derivation process is described by using only an example in which the current network layer is the convolution layer. If the current network layer is a fully-connected layer, the convolution operation in the foregoing derivation process is replaced with a matrix multiplication operation.

The quantization operation, the dequantization operation, and calculation of the PWL that are in the target neural network model are fused, or the weight parameter of the network layer, the quantization parameter, the parameter of the PWL, and the quantization parameter of the next network layer are fused, to obtain a fused quantization parameter, which is equivalent to implement quantization of the parameter of the PWL. In this way, the quantization operation, the dequantization operation, and calculation of the PWL are fused. In the inference process of the PWL quantization model, the calculation process of the PWL is fused into the quantization process, and calculation of the PWL does not to be additionally performed. This can simplify hardware implementation and reduce hardware costs. In addition, all parameters in the target neural network quantization model are obtained through derivation and calculation based on the parameters in the target neural network model, and the target neural network model can theoretically implement same precision as the target neural network model.

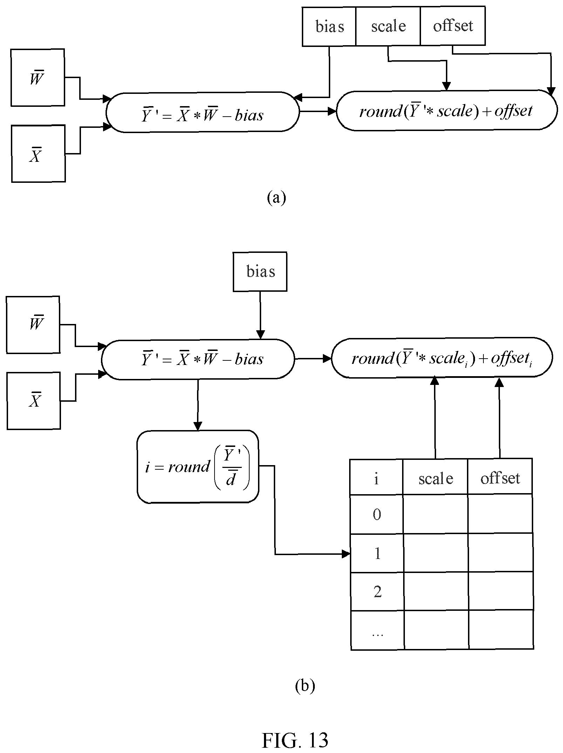

The following describes in detail the data processing method in embodiments of this application with reference to FIG. 12 and FIG. 13.

FIG. 12 shows a data processing method 1200 according to an embodiment of this application. The method shown in FIG. 12 may be performed by a neural network model execution apparatus. The apparatus may be a cloud service device, or may be a terminal device, for example, an apparatus that has a sufficient computing capability to perform the data processing method, such as a computer, a server, a vehicle, an unmanned aerial vehicle, or a robot, or may be a system including a cloud service device and a terminal device. For example, the method 1200 may be performed by the execution device 110 in FIG. 5, the neural-network processing unit 50 in FIG. 6, and the execution device 310 or the local device in FIG. 7. The method 1200 may be implemented by software, or may be implemented by hardware.

For example, the solution in this embodiment of this application can be built in a computing device. The computing device may be a cloud service device, or may be a terminal device. For example, the solution in this embodiment of this application can be built in a terminal, that is, the terminal performs the method in this embodiment of this application. Alternatively, the solution in this embodiment of this application can be deployed in an application (application, APP) on a computing device, for example, deployed in an APP on a terminal, that is, the method in this embodiment of this application is invoked by the APP.

In this embodiment of this application, the method 1200 may also be understood as a neural network model quantization inference method.

The method 1200 includes step S1210 and step S1220. The following describes step S1210 and step S1220 in detail.

S1210: Obtain to-be-processed data. The to-be-processed data includes image data, audio data, or text data.

A type of the to-be-processed data is related to a task of a neural network model. For example, if the neural network model is used for an image processing task, the to-be-processed data may be an image. Specifically, the image processing task includes image classification, image detection, image segmentation, image recognition, image generation, or the like. For another example, if the neural network model is used for a text processing task, the to-be-processed data may be a text. Specifically, the text processing task includes text recognition, text translation, or the like. For another example, if the neural network model is used for an audio processing task, the to-be-processed data may be audio data. Specifically, the audio processing task includes speech recognition and the like. The type of the to-be-processed data is not limited in this embodiment of this application.

For example, the to-be-processed data is an image. The to-be-processed image may be an image photographed by a terminal device (or another apparatus or device such as a computer or a server) by using a camera, or the to-be-processed image may be an image obtained from a terminal device (or another apparatus or device such as a computer or a server) (for example, an image stored in an album of the terminal device, or an image obtained by the terminal device from a cloud). This is not limited in this embodiment of this application.

S1220: Process the to-be-processed data by using a target neural network quantization model, where the target neural network quantization model includes a plurality of groups of fusion parameters. The target neural network quantization model is obtained by quantizing a target neural network model, an activation function of the target neural network model includes a PWL, the PWL includes a plurality of intervals, and there is a correspondence between the plurality of groups of fusion parameters and the plurality of intervals.

Specifically, step S1220 includes: determining target indication information based on the to-be-processed data; and obtaining, from the plurality of groups of fusion parameters based on the target indication information, a target fusion parameter corresponding to the target indication information, and processing the to-be-processed data based on the target fusion parameter.

The activation function of the target neural network model includes one or more PWLs. One PWL includes a plurality of intervals. In other words, one PWL corresponds to a plurality of groups of fusion parameters. The plurality of groups of fusion parameters are separately obtained through calculation based on parameters of the plurality of intervals of the PWL.

The target neural network model may be obtained through quantization training. In other words, a quantization operation and a dequantization operation are inserted into the model to perform quantization training, to improve performance of a model obtained through quantization training.

For example, the target neural network model may be obtained by using the method 900 or the method 1000. Alternatively, the target neural network model may be obtained through training by using another method.

For example, the target indication information may be an index of a target interval, that is, the target indication information may indicate the target interval. The target interval belongs to a plurality of intervals of one PWL.

That the target indication information is determined based on the to-be-processed data may be understood as that the target indication information is determined based on the to-be-processed data itself, or may be understood that the target indication information is determined based on data obtained after processing performed on the to-be-processed data. For example, processing is performed on the to-be-processed data at one or more network layers, and the target indication information is determined based on a processing result.

Optionally, the determining target indication information based on the to-be-processed data includes: processing an input feature of a first network layer based on a weight parameter of the first network layer in the target neural network quantization model; and determining the target indication information based on a processing result of the first network layer. The input feature of the first network layer is determined based on the to-be-processed data.

The plurality of groups of fusion parameters may be prestored. For example, the plurality of groups of fusion parameters may be stored in a buffer (buffer). In a quantization inference process, a corresponding fusion parameter is obtained from the buffer based on the target indication information.

According to the solution in this embodiment of this application, the target neural network quantization model may perform processing based on the plurality of groups of fusion parameters corresponding to the plurality of intervals of the PWL, to implement quantization inference of the model. Specifically, the plurality of groups of fusion parameters are obtained by fusing the quantization process and a calculation process of the PWL that are in the target neural network model, so that a processing result of the model is obtained based on the plurality of groups of fusion parameters in the inference process, and calculation of the PWL does not need to be additionally performed. This implements quantization inference of the model, reduces calculation workload, and improves processing efficiency. In terms of effect, the target neural network quantization model is completely quantized, that is, not only the weight parameter is quantized, but also the parameter of the PWL is quantized. If the method 1200 is implemented by using hardware, calculation workload can be reduced, power consumption overheads can be reduced, and inference efficiency can be improved.

Compared with a quantization inference process in which a ReLU is used as an activation function, in the quantization inference process in which the PWL is used as the activation function, only the target indication information needs to be additionally determined, and a corresponding fusion parameter is obtained based on the target indication information for calculation. However, using the PWL as the activation function can improve performance of the model. In other words, when the PWL is used as the activation function, performance of the model can be improved without introducing excessive calculation workload.

Optionally, the plurality of groups of fusion parameters are obtained by separately fusing, based on the plurality of intervals, a quantized operation of a network layer, a dequantization operation, calculation of the PWL, and a feature quantization operation of a next network layer that are sequentially performed in a forward propagation process of the target neural network model.

For example, the network layer may include a convolution layer, a fully-connected layer, or the like.

For a specific fusion manner, refer to related descriptions in FIG. 11. Details are not described herein again.

For example, the target neural network model is obtained through quantization training. In the forward propagation process of the target neural network model, a quantized operation of a network layer 1#, a dequantization operation, calculation of a PWL corresponding to the network layer 1#, and a feature quantization operation of a next network layer of the network layer 1# need to be sequentially performed, for example, as shown in FIG. 11. The foregoing operations are fused, in other words, the parameters of the foregoing operations are fused to obtain the plurality of groups of fusion parameters, where the plurality of groups of fusion parameters are in a one-to-one correspondence with the plurality of intervals of the PWL.

In the forward propagation process of the target neural network model, after the quantized operation of the network layer 1# is performed, the dequantization operation is performed, and a target interval of the PWL is determined based on a result of the dequantization operation, that is, an interval that is in a definition domain of the current PWL and in which the result of the dequantization operation falls, calculation of the PWL is then performed, a calculation result of the PWL is used as an input feature of the next network layer, and the feature quantization operation of the next network layer is performed on the input feature.

In the inference process of the target neural network quantization model, after the quantized operation of the network layer 1# is performed, the target indication information is determined based on an operation result, where the target indication information may indicate the index of the target interval, the target fusion parameter is obtained from the plurality of groups of fusion parameters based on the target indication information, and processing is performed based on the target fusion parameter. In other words, the target fusion parameter is a fusion parameter corresponding to the target interval. For the same to-be-processed data, theoretically, a processing result of the target neural network quantization model is consistent with a processing result of the target neural network model.

In the solution in this embodiment of this application, the target neural network quantization model is obtained by fusing the quantization operation, the dequantization operation, and the calculation process of the PWL that are in the inference process of the target neural network model. In other words, in the inference process of the target neural network quantization model, it is equivalent to fusing the quantization process and the calculation process of the PWL that are in the target neural network model, thereby reducing calculation workload and improving processing efficiency. In addition, hardware implementation is simplified, and implementation costs are reduced. In addition, the plurality of groups of fusion parameters of the target neural network quantization model are implemented by fusing the operations on the target neural network model. Theoretically, inference precision of the target neural network quantization model is consistent with precision of the target neural network model. If the target neural network model is obtained after quantization training is performed on a full-precision neural network model, the target neural network quantization model can achieve inference precision close to that of the full-precision neural network model.

In a possible implementation, step S1220 includes step S1221 to step S1225. These steps are not shown in FIG. 12.

S1221: Process a feature input into a first network layer based on a weight parameter of the first network layer in the target neural network quantization model.

The weight parameter of the first network layer in the target neural network quantization model is obtained by quantizing a weight parameter of a second network layer in the target neural network model, the second network layer is a network layer that is in the target neural network model and that corresponds to the first network layer in the target neural network quantization model, and the input feature of the first network layer is a quantized feature. The input feature of the first network layer is determined based on the to-be-processed data.

An activation function corresponding to the second network layer is a PWL. In other words, the second network layer may be any network layer in the target neural network model, provided that an activation function corresponding to the network layer is the PWL.

If the PWL is considered as an independent network layer, the PWL corresponding to the second network layer is a next network layer of the second network layer, and the next network layer of the second network layer is a PWL layer. If the PWL is considered as a step in multi-step calculation of network layers such as a convolution layer, the PWL corresponding to the second network layer is an activation operation performed by the second network layer, and an activation function used by the activation operation is the PWL.

It should be understood that "first" and "second" in "first network layer" and "second network layer" in embodiments of this application are only used to distinguish between a network layer in the target neural network quantization model and a network layer in the target neural network model, and have no other limitation function.

Specifically, a quantization parameter of the second network layer includes a weight quantization parameter of the second network layer and a feature quantization parameter of the second network layer. The weight quantization parameter of the second network layer is used to quantize the weight parameter of the second network layer, and the feature quantization parameter of the second network layer is used to quantize an input feature of the second network layer.

The weight parameter of the first network layer is obtained by quantizing the weight parameter of the second network layer based on the weight quantization parameter of the second network layer.

For example, the weight parameter of the first network layer meets the following formula:

$$\overline{W} = round\left(\frac{W}{S_W}\right),$$

where

$\overline{W}$ represents the weight parameter of the first network layer, that is, a quantized weight parameter of the second network layer, W represents the weight parameter of the second network layer, and $S_W$ represents the weight quantization parameter of the second network layer. If the second network layer is a convolution layer, W may also be referred to as a convolution weight parameter of the second network layer, or $\overline{W}$ may be referred to as a convolution weight parameter of the first network layer.

The input feature of the first network layer may be obtained by quantizing the input feature of the second network layer based on the feature quantization parameter of the second network layer.

That the input feature of the first network layer is determined based on the to-be-processed data may be understood as that the input feature of the first network layer is obtained after the to-be-processed data is quantized, or may be understood as that the input feature of the first network layer is determined based on data obtained after the to-be-processed data is processed. For example, processing is performed on the to-be-processed data at one or more network layers. A processing result may be understood as the input feature of the second network layer. A result obtained after processing is quantized based on the feature quantization parameter of the second network layer, to obtain the input feature of the first network layer. The one or more network layers are network layers before the first network layer.

For example, the input feature of the first network layer meets the following formula:

$$\overline{X} = round\left(\frac{X}{S_X}\right),$$

where

$\overline{X}$ represents the input feature of the first network layer, that is, a quantized input feature of the second network layer, X represents the input feature of the second network layer, and $S_X$ represents the feature quantization parameter of the second network layer.

Alternatively, the input feature of the first network layer may meet the following formula:

$$\overline{X} = round\left(\frac{X - \beta}{S_X}\right),$$

where $\beta$ and $S_X$ are feature quantization parameters of the second network layer. For ease of description, in this embodiment of this application, only this manner is used as an example to describe a quantization inference process. If $\beta$ is not set in the quantization process, a value of $\beta$ in the following is set to 0.

For example, a processing result of the first network layer meets the following formula:

$$\overline{Y} = \overline{X} * \overline{W},$$

where $\overline{Y}$ represents the processing result of the first network layer.

S1222: Process the processing result of the first network layer based on a fusion bias parameter to obtain a first result.

For ease of description, in this embodiment of this application, processing performed based on the fusion bias parameter is referred to as performing a bias operation.

In other words, step S 1222 may be understood as performing the bias operation on the processing result of the first network layer based on the fusion bias parameter, to obtain the first result. For ease of understanding and description, the first result is referred to as a result of the bias operation in the following.

Specifically, step S1222 includes: performing an addition operation or a subtraction operation on the fusion bias parameter and the processing result of the first network layer.

Optionally, the fusion bias parameter is determined based on at least one of the following: a weight parameter of the second network layer, a parameter of the PWL corresponding to the second network layer, or a quantization parameter of the second network layer.

Further, when the second network layer includes a bias parameter, the fusion bias parameter may be further determined based on the bias parameter of the second network layer.

Optionally, the fusion bias parameter meets the following formula:

$$bias = \frac{LB - \overline{W} * S_W * \beta - b}{S_W * S_X},$$

where bias represents the fusion bias parameter, LB represents a left boundary in the parameter of the PWL corresponding to the second network layer, and b represents a bias parameter of the second network layer.

For example, the result of the bias operation may meet the following formula:

$$\overline{Y}' = \overline{Y} - bias,$$

where $\overline{Y}$ represents the result of the bias operation.

Alternatively, as shown in (b) in FIG. 13, results of step S1121 and step S1122 may also meet the following formula:

$$\overline{Y}' = \overline{X} * \overline{W} - bias,$$

where both $\overline{W}$ and bias may be pre-stored in a buffer, and $\overline{W}$ and bias may be obtained from the buffer when step S1121 and step S1122 are performed, to perform a corresponding operation.

S1223: Determine target indication information.

As shown above, the target indication information may indicate a target interval in the PWL, that is, an interval in which data input into the PWL falls.

Optionally, the target indication information is obtained based on the result obtained after the bias operation in step S1222.

In this way, the calculation result in step S1222 can be fully used, and another calculation does not need to be performed to obtain the target indication information, thereby avoiding an unnecessary calculation and improving processing efficiency.

Optionally, the obtaining the target indication information based on the result obtained after the bias operation includes: obtaining the target indication information through calculation based on the result obtained after the bias operation and an equivalent length of an intermediate interval in the PWL corresponding to the second network layer, where the equivalent length of the intermediate interval is determined based on a length of the intermediate interval and a quantization parameter of the second network layer. In this case, lengths of intermediate intervals may be equal.

Optionally, the equivalent length of the intermediate interval meets the following formula:

$$\overline{d} = \frac{d}{S_W * S_X},$$

where $\overline{d}$ represents the equivalent length of the intermediate interval, $d$ represents the length of the intermediate interval, $S_W$ represents the weight quantization parameter of the second network layer, and $S_X$ represents the feature quantization parameter of the second network layer.

The length of the intermediate interval may be determined based on a left boundary, a right boundary, and a quantity of intermediate intervals of the PWL. For a specific calculation method, refer to the foregoing description. Details are not described herein again.

Optionally, the target indication information meets the following formula:

$$round\left(\frac{\overline{X}*\overline{W}-bias}{\overline{\overline{d}}}\right),$$

where i represents the target indication information, or may be referred to as an index of a target interval, that is, an $i^{th}$ interval is the target interval.

For example, as shown in (b) in FIG. 13, the target indication information is obtained through calculation based on the result of the bias operation. It should be noted that a value of i in (b) in FIG. 13 is merely an example, and a specific value range may be set as required.

The target indication information meets the following formula:

$$i = round\left(\frac{\overline{Y}'}{\overline{\overline{d}}}\right).$$

Optionally, the equivalent length of the intermediate interval is an integer power of 2.

In this way, the index of the target interval, that is, the target indication information, may be obtained through shift (shift). Specifically, shifting data to the right by one bit is equivalent to an operation of dividing by 2. If the equivalent length of the intermediate interval is $2^n$ and n is an integer, when the index of the target interval is calculated, an operation of dividing by $2^n$ needs to be performed, and the operation can be implemented by shifting n bits, thereby avoiding performing the division operation by using a divider. No divider needs to be disposed in hardware, so that costs can be reduced. In addition, compared with the divider, the index of the target interval is obtained through shift, which can reduce calculation workload, reduce power consumption overheads, and improve inference efficiency.

For example, the target neural network model may be a target neural network model obtained by using the method 900, or may be a target neural network model obtained by using the method 1000.

Alternatively, the target indication information is determined based on the processing result of the first network layer and each demarcation point in the PWL corresponding to the second network layer. An equivalent value of each demarcation point may be determined based on a value of each demarcation point and the quantization parameter of the second network layer.

For example, a dequantization operation is performed on the processing result of the first network layer, and a result of the dequantization operation is compared with each demarcation point, to obtain the target indication information.

S1224: Obtain a target fusion scaling parameter in the target fusion parameter based on the target indication information, and process the first result based on the target fusion scaling parameter to obtain a second result

In other words, a fusion scaling parameter corresponding to an interval, that is, the target fusion scaling parameter, is determined by using the target indication information.

For ease of description, in this embodiment of this application, processing performed based on the target fusion scaling parameter is referred to as scaling processing.

In other words, the processing the first result based on the target fusion scaling parameter may be understood as performing scaling processing on the first result based on the target fusion scaling parameter to obtain the second result. For ease of description and understanding, the second result is referred to as a result of scaling processing in the following.

Specifically, the performing scaling processing on the first result based on the target fusion scaling parameter includes: performing a multiplication operation or a division operation on the target fusion scaling parameter and the first result.

The fusion parameter includes a fusion scaling parameter and a fusion offset parameter.

The target fusion parameter is one of the plurality of groups of fusion parameters, and correspondingly, the target fusion scaling parameter is one of a plurality of fusion scaling parameters. The corresponding fusion scaling parameter, that is, the target fusion scaling parameter, may be obtained from the plurality of fusion scaling parameters based on the target indication information.

For example, the target indication information may be an index of a target interval. There is a correspondence between indexes of a plurality of intervals of the PWL and the plurality of fusion scaling parameters, and the target fusion scaling parameter may be obtained based on the index of the target interval and the correspondence.

For example, as shown in (b) in FIG. 13, the target fusion scaling parameter $scale_i$ is obtained based on an index i of the target interval.

Optionally, the target fusion scaling parameter is determined based on at least one of the following: a parameter of the PWL corresponding to the second network layer, a quantization parameter of the second network layer, or a quantization parameter of an adjacent network layer after the second network layer.

The quantization parameter of the adjacent network layer after the second network layer includes a feature quantization parameter of the adjacent network layer after the second network layer.

Optionally, the target fusion scaling parameter meets the following formula:

$$scale_i = \frac{S_W * S_X * K_i}{S_Z},$$

where $scale_i$ represents the target fusion scaling parameter. $S_Z$ represents a feature quantization parameter of a next network layer of the second network layer, and $K_i$ represents a slope of an $i^{th}$ interval in the PWL corresponding to the second network layer.

S1224: Obtain a target fusion offset parameter in the target fusion parameter based on the target indication information, and process the second result based on the target fusion offset parameter to obtain a third result.

For ease of description, in this embodiment of this application, processing performed based on the target fusion offset parameter is referred to as offset processing.

In other words, the processing the second result based on the target fusion offset parameter may be understood as performing offset processing on the second result based on the target fusion offset parameter to obtain the third result. For ease of description and understanding, the third result is referred to as a result of offset processing in the following.

Specifically, the performing offset processing on the first result based on the target fusion offset parameter includes: performing an addition operation or a subtraction operation on the target fusion offset parameter and the second result.

In other words, a fusion offset parameter corresponding to an interval, that is, the target fusion offset parameter, is determined by using the target indication information.

The target fusion parameter is one of the plurality of groups of fusion parameters, and correspondingly, the target fusion offset parameter is one of a plurality of fusion offset parameters. The corresponding fusion offset parameter, that is, the target fusion offset parameter, may be obtained from the plurality of fusion offset parameters based on the target indication information.

For example, the target indication information may be an index of a target interval. There is a correspondence between indexes of a plurality of intervals of the PWL and the plurality of fusion offset parameters, and the target fusion offset parameter may be obtained based on the index of the target interval and the correspondence.

For example, as shown in (b) in FIG. 13, the target fusion offset parameter $offset_i$ is obtained based on an index i of the target interval.

The target fusion offset parameter is determined based on at least one of the following: a parameter of the PWL corresponding to the second network layer or a quantization parameter of an adjacent network layer after the second network layer.

Optionally, the target fusion offset parameter meets the following formula:

$$offset_i = \frac{(LB - B_i) * K_i + P_i - \gamma}{S_Z},$$

where $offset_i$ represents the target fusion offset parameter, and i represents the target indication information. $S_Z$ and $\gamma$ represent feature quantization parameters of a next network layer of the second network layer, and $K_i$ represents a slope of an $i^{th}$ interval in the PWL corresponding to the second network layer. $B_i$ represents a left endpoint of the $i^{th}$ interval in the PWL corresponding to the second network layer.

Further, step S 1220 further includes step S1226.

S 1226: Perform rounding processing on the result obtained after offset processing. A result obtained after rounding processing is an input feature of a next network layer of the first network layer.

For example, the input feature of the next network layer of the first network layer meets the following formula:

$$\overline{Z} = round\left((\overline{X} * \overline{W} - bias) * scale_i + offset_i\right),$$

where $\overline{Z}$ represents the input feature of the next network layer of the first network layer.

Alternatively, the input feature of the next network layer of the first network layer meets the following formula:

$$\overline{Z} = round(\overline{Y}' * scale_i + offset_i).$$

Alternatively, step S1224 further includes: performing rounding processing on the result obtained after scaling processing.

In this case, step S1125 includes: performing, based on the target fusion offset parameter, offset processing on the result obtained after rounding processing, where an obtained result is the input feature of the next network layer of the first network layer.

For example, an input feature of a network layer after the first network layer meets the following formula:

$$\overline{Z} = round\left((\overline{X} * \overline{W} - bias) * scale_i\right) + offset_i.$$

Alternatively, as shown in (b) in FIG. 13, the input feature of the next network layer of the first network layer may meet the following formula:

$$\overline{Z} = round(\overline{Y}' * scale_i) + offset_i.$$

The result obtained after rounding processing performed after scaling processing is slightly different from the result obtained after rounding processing is performed after offset processing. In other words, in this embodiment of this application, rounding processing may be performed after scaling processing, or may be performed after offset processing. This is not limited in this embodiment of this application.

The parameter in the inference process of the target neural network quantization model may be obtained through pre-calculation by using the foregoing method. For example, bias, $scale_i$, $offset_i$, and $\overline{d}$ are all obtained through pre-calculation based on parameter in the target neural network model.

For comparison, (a) in FIG. 13 further shows a quantization inference process in which a ReLU is used as an activation function. Compared with the quantization inference process in which the ReLU is used as the activation function, in the quantization inference process in which the PWL is used as the activation function, the target indication information needs to be determined, and the corresponding fusion parameter is obtained based on the target indication information for calculation. When the equivalent length of the intermediate interval of the PWL is the integer power of 2, the index of the target middle interval may be obtained through shift, without increasing excessive calculation workload. However, using the PWL as the activation function can improve performance of the model. In other words, when the PWL is used as the activation function, performance of the model can be improved without introducing an excessive calculation workload.

It should be understood that, in FIG. 13, only a quantization inference process of one convolution layer is used as an example, and the target neural network quantization model may further include another network layer. This is not limited in this embodiment of this application.

In addition, step S1220 may also be implemented in another manner, and a specific processing manner is related to a specific representation form of the fusion parameter.

It may be understood that the method 900 is a quantization training phase of the PWL model (a phase performed by the training device 120 shown in FIG. 5), and specific training is performed by using the neural network model provided in the method 900. The method 1200 may be understood as an application phase of the model (a phase performed by the execution device 110 shown in FIG. 5), and may specifically reflect that quantization processing is performed on the target neural network model obtained through training by using the method 900, and the output result is obtained based on the input to-be-processed data. It should be noted that, in the method 1200, the target neural network model obtained through training by using the method 900 may not be used.

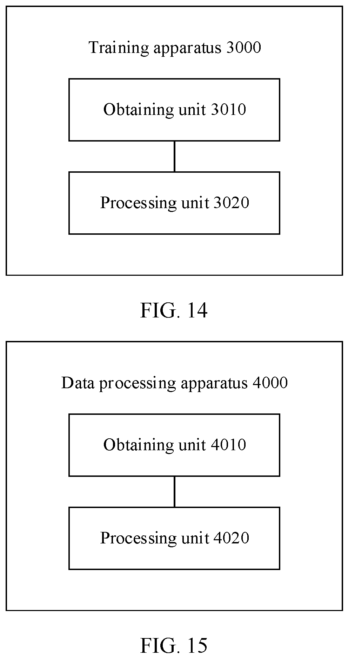

The following describes apparatuses in embodiments of this application with reference to FIG. 14 to FIG. 17. It should be understood that the apparatus described below can perform the method in the foregoing embodiments of this application. To avoid unnecessary repetition, repeated descriptions are appropriately omitted when the apparatus in embodiments of this application is described below.

FIG. 14 is a schematic block diagram of a neural network model training apparatus according to an embodiment of this application. The neural network model training apparatus 3000 shown in FIG. 14 includes an obtaining unit 3010 and a processing unit 3020.

The obtaining unit 3010 and the processing unit 3020 may be configured to perform the neural network model training method in embodiments of this application, and may be specifically configured to perform the method 900 or the method 1000.

The obtaining unit 3010 is configured to obtain neural network model, where an activation function of the neural network model includes a piecewise linear function PWL, and the PWL includes a plurality of intervals.

The processing unit 3020 is configured to train the neural network model based on training data to obtain a target neural network model, where the training data includes image data, audio data, or text data; and process the target neural network model to obtain a target neural network quantization model, where the target neural network quantization model includes a plurality of groups of fusion parameters, and there is a correspondence between the plurality of groups of fusion parameters and the plurality of intervals of the PWL in the target neural network model.

Optionally, in an embodiment, the processing unit 3020 is specifically configured to obtain the plurality of groups of fusion parameters based on parameters of the plurality of intervals of the PWL in the target neural network model and a weight quantization parameter and a feature quantization parameter that are of the neural network model, to obtain the target neural network quantization model, where the weight quantization parameter and the feature quantization parameter that are of the neural network model are obtained through quantization training.

Optionally, in an embodiment, the processing unit 3020 is specifically configured to: train the neural network model based on the training data; adjust a length of an intermediate interval of a PWL in the trained neural network model to obtain an adjusted neural network model; and obtain the target neural network model based on the adjusted neural network model.

Optionally, in an embodiment, the processing unit 3020 is specifically configured to: determine a target scaling coefficient of the PWL in the trained neural network model based on an equivalent length of the intermediate interval, where the equivalent length of the intermediate interval is determined based on the length of the intermediate interval of the PWL in the trained neural network model and the weight quantization parameter and the feature quantization parameter that are of the neural network model; and adjust, based on the target scaling coefficient, a parameter of a target network layer in the trained neural network model and the length of the intermediate interval of the PWL in the trained neural network model, to obtain the adjusted neural network model, where the target network layer corresponds to the PWL in the trained neural network model.

Optionally, in an embodiment, the processing unit 3020 is specifically configured to: determine the target scaling coefficient based on the equivalent length of the intermediate interval and an integer power of 2 that is closest to the equivalent length of the intermediate interval.

FIG. 15 is a schematic block diagram of a data processing apparatus 4000 according to an embodiment of this application. The data processing apparatus 4000 shown in FIG. 15 includes an obtaining unit 4010 and a processing unit 4020.

The obtaining unit 4010 and the processing unit 4020 may be configured to perform the data processing method in embodiments of this application, for example, may be configured to perform the method 1200.

The obtaining unit 4010 is configured to obtain to-be-processed data, where the data includes image data, audio data, or text data.

The processing unit 4020 is configured to process the to-be-processed data by using a target neural network quantization model, where the target neural network quantization model includes a plurality of groups of fusion parameters, the target neural network quantization model is obtained by quantizing a target neural network model, an activation function of the target neural network model includes a piecewise linear function PWL, the PWL includes a plurality of intervals, and there is a correspondence between the plurality of groups of fusion parameters and the plurality of intervals.

Optionally, in an embodiment, the processing unit 4020 is specifically configured to determine target indication information based on the to-be-processed data; and obtain, from the plurality of groups of fusion parameters based on the target indication information, a target fusion parameter corresponding to the target indication information, and process the to-be-processed data based on the target fusion parameter.

Optionally, in an embodiment, the processing unit 4020 is specifically configured to process an input feature of a first network layer based on a weight parameter of the first network layer in the target neural network quantization model, where the input feature of the first network layer is determined based on the to-be-processed data; and determine the target indication information based on a processing result of the first network layer.

Optionally, in an embodiment, the weight parameter of the first network layer is obtained by quantizing a weight parameter of a second network layer in the target neural network model, and the second network layer is a network layer that is in the target neural network model and that corresponds to the first network layer; and the processing unit 4020 is specifically configured to process the processing result of the first network layer based on a fusion bias parameter to obtain a first result; and obtain the target indication information through calculation based on the first result and an equivalent length of an intermediate interval in a plurality of intervals of a PWL corresponding to the second network layer, where the equivalent length of the intermediate interval is determined based on a length of the intermediate interval and a quantization parameter of the second network layer.

Optionally, in an embodiment, the equivalent length of the intermediate interval is an integer power of 2.

Optionally, in an embodiment, the processing unit 4020 is specifically configured to obtain a target fusion scaling parameter in the target fusion parameter based on the target indication information, and process the first result based on the target fusion scaling parameter to obtain a second result; and obtain a target fusion offset parameter in the target fusion parameter based on the target indication information, and process the second result based on the target fusion offset parameter to obtain a third result.

Optionally, in an embodiment, the processing unit 4020 is further configured to perform rounding processing on the third result.

Optionally, in an embodiment, the processing unit 4020 is further configured to perform rounding processing on the second result to obtain a rounded second result; and the processing unit 4020 is specifically configured to process, based on the target fusion offset parameter, the second result obtained after rounding processing to obtain a third result.

It should be noted that the training apparatus 3000 and the apparatus 4000 are embodied in a form of functional units. The term "unit" herein may be implemented in a form of software and/or hardware. This is not specifically limited.

For example, the "unit" may be a software program, a hardware circuit, or a combination thereof that implements the foregoing function. The hardware circuit may include an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

Therefore, the units in the example described in this embodiment of this application can be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

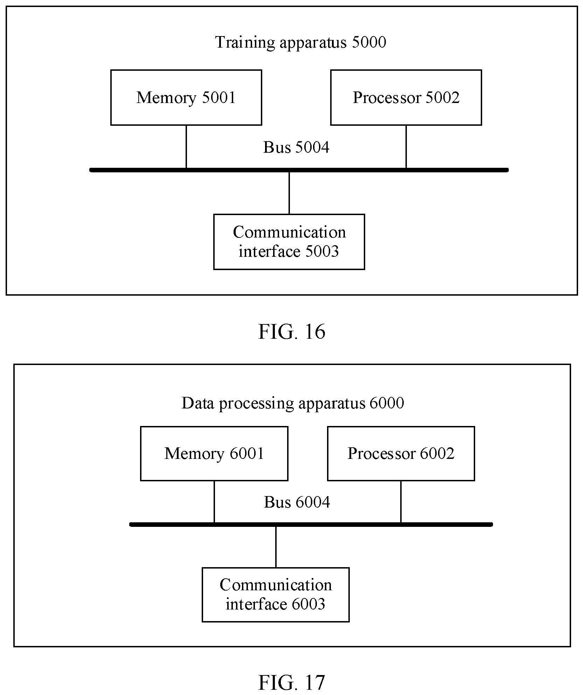

FIG. 16 is a schematic diagram of a hardware structure of a neural network model training apparatus according to an embodiment of this application. The training apparatus 5000 of the neural network model shown in FIG. 16 (the apparatus 5000 may be specifically a computer device) includes a memory 5001, a processor 5002, a communication interface 5003, and a bus 5004. The memory 5001, the processor 5002, and the communication interface 5003 are communicatively connected to each other through the bus 5004.

The memory 5001 may be a read-only memory (read only memory, ROM), a static storage device, a dynamic storage device, or a random access memory (random access memory, RAM). The memory 5001 may store a program. When the program stored in the memory 5001 is executed by the processor 5002, the processor 5002 is configured to perform steps of the neural network model training method in embodiments of this application. Specifically, the processor 5002 may perform step S920 to step S930 in the method shown in FIG. 9, or perform step S1010 to step S1090 shown in FIG. 10.

The processor 5002 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the neural network model training method in the method embodiments of this application.

Alternatively, the processor 5002 may be an integrated circuit chip and has a signal processing capability. For example, the processor may be the chip shown in FIG. 6. In an implementation process, the steps of the neural network model training method in this application may be completed by using a hardware integrated logic circuit in the processor 5002 or instructions in a form of software.

The processor 5002 may be alternatively a general-purpose processor, a digital signal processor (digital signal processing, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 5001. The processor 5002 reads information in the memory 5001, and completes, in combination with hardware of the processor 5002, functions that need to be performed by the units included in the training apparatus shown in FIG. 14, or performs the neural network model training method shown in FIG. 9 or FIG. 10 in the method embodiments of this application.

The communication interface 5003 uses a transceiver apparatus, for example, but not limited to, a transceiver, to implement communication between the apparatus 5000 and another device or a communication network. For example, the training data or the neural network model may be obtained through the communication interface 5003.

The bus 5004 may include a path for information transfer between various components (for example, the memory 5001, the processor 5002, and the communication interface 5003) of the apparatus 5000.

FIG. 17 is a schematic diagram of a hardware structure of a data processing apparatus according to an embodiment of this application. A data processing apparatus 6000 shown in FIG. 17 includes a memory 6001, a processor 6002, a communication interface 6003, and a bus 6004. The memory 6001, the processor 6002, and the communication interface 6003 are communicatively connected to each other through the bus 6004.

The memory 6001 may be a ROM, a static storage device, and a RAM. The memory 6001 may store a program. When the program stored in the memory 6001 is executed by the processor 6002, the processor 6002 and the communication interface 6003 are configured to perform the steps of the data processing method in embodiments of this application. Specifically, the processor 6002 may perform step S 1220 in the method shown in FIG. 12.

The processor 6002 may be a general-purpose CPU, a microprocessor, an ASIC, a GPU, or one or more integrated circuits, and is configured to execute a related program, to implement a function that needs to be executed by a unit in the data processing apparatus in embodiments of this application, or perform the data processing method in the method embodiments of this application.

Alternatively, the processor 6002 may be an integrated circuit chip and has a signal processing capability. For example, the processor may be the chip shown in FIG. 6. In an implementation process, the steps of the data processing method in embodiments of this application may be completed by using a hardware integrated logic circuit in the processor 6002 or instructions in a form of software.

The foregoing processor 6002 may alternatively be a general-purpose processor, a DSP, an ASIC, an FPGA or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 6001. The processor 6002 reads information in the memory 6001, and completes, in combination with hardware of the processor, a function that needs to be performed by a unit included in the data processing apparatus in embodiments of this application, or performs the data processing method in the method embodiments of this application.

The communication interface 6003 uses a transceiver apparatus, for example, but not limited to, a transceiver, to implement communication between the apparatus 6000 and another device or a communication network. For example, to-be-processed data may be obtained through the communication interface 6003.

The bus 6004 may include a path for information transfer between various components (for example, the memory 6001, the processor 6002, and the communication interface 6003) of the apparatus 6000.

It should be noted that, although only the memory, the processor, and the communication interface are shown in each of the apparatus 5000 and the apparatus 6000, in a specific implementation process, a person skilled in the art should understand that the apparatus 5000 and the apparatus 6000 each may further include another component necessary for normal running. In addition, according to a specific requirement, a person skilled in the art should understand that the apparatus 5000 and the apparatus 6000 may further include hardware components for implementing other additional functions. In addition, a person skilled in the art should understand that the apparatus 5000 and the apparatus 6000 may include only components necessary for implementing embodiments of this application, but not necessarily include all the components shown in FIG. 16 and FIG. 17.

It should be understood that, the processor in the embodiments of this application may be a central processing unit (central processing unit, CPU). The processor may be further another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. At least one of the following items (pieces) or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data processing method, comprising:

   obtaining to-be-processed data, wherein the data comprises image data, audio data, or text data; and
   processing the to-be-processed data by using a target neural network quantization model, wherein the target neural network quantization model comprises a plurality of groups of fusion parameters, the target neural network quantization model is obtained by quantizing a target neural network model, an activation function of the target neural network model comprises a piecewise linear function PWL, the PWL comprises a plurality of intervals, and there is a correspondence between the plurality of groups of fusion parameters and the plurality of intervals.

2. The method according to claim 1, wherein the processing the to-be-processed data by using a target neural network quantization model comprises:

   determining target indication information based on the to-be-processed data; and
   obtaining, from the plurality of groups of fusion parameters based on the target indication information, a target fusion parameter corresponding to the target indication information, and processing the to-be-processed data based on the target fusion parameter.

3. The method according to claim 2, wherein the determining target indication information based on the to-be-processed data comprises:

   processing an input feature of a first network layer based on a weight parameter of the first network layer in the target neural network quantization model, wherein the input feature of the first network layer is determined based on the to-be-processed data; and
   determining the target indication information based on a processing result of the first network layer.

4. The method according to claim 3, wherein the weight parameter of the first network layer is obtained by quantizing a weight parameter of a second network layer in the target neural network model, and the second network layer is a network layer that is in the target neural network model and that corresponds to the first network layer; and
   the determining the target indication information based on a processing result of the first network layer comprises:

   processing the processing result of the first network layer based on a fusion bias parameter to obtain a first result; and
   obtaining the target indication information through calculation based on the first result and an equivalent length of an intermediate interval in a plurality of intervals of a PWL corresponding to the second network layer, wherein the equivalent length of the intermediate interval is determined based on a length of the intermediate interval and a quantization parameter of the second network layer.

5. The method according to claim 4, wherein the equivalent length of the intermediate interval is an integer power of 2.

6. A neural network model training method, comprising:

   obtaining a neural network model, wherein an activation function of the neural network model comprises a piecewise linear function PWL, and the PWL comprises a plurality of intervals;
   training the neural network model based on training data to obtain a target neural network model, wherein the training data comprises image data, audio data, or text data; and
   processing the target neural network model to obtain a target neural network quantization model, wherein the target neural network quantization model comprises a plurality of groups of fusion parameters, and there is a correspondence between the plurality of groups of fusion parameters and the plurality of intervals of the PWL in the target neural network model.

7. The training method according to claim 6, wherein the processing the target neural network model to obtain a target neural network quantization model comprises:
obtaining the plurality of groups of fusion parameters based on respective parameters of the plurality of intervals of the PWL in the target neural network model and a weight quantization parameter and a feature quantization parameter that are of the neural network model, to obtain the target neural network quantization model, wherein the weight quantization parameter and the feature quantization parameter that are of the neural network model are obtained through quantization training.

8. The training method according to claim 6 or 7, wherein the training the neural network model based on training data to obtain a target neural network model comprises:

training the neural network model based on the training data;
adjusting a length of an intermediate interval of a PWL in the trained neural network model to obtain an adjusted neural network model; and
obtaining the target neural network model based on the adjusted neural network model.

9. The training method according to claim 8, wherein the adjusting a length of an intermediate interval of a PWL in the trained neural network model to obtain an adjusted neural network model comprises:

determining a target scaling coefficient of the PWL in the trained neural network model based on an equivalent length of the intermediate interval of the PWL in the trained neural network model, wherein the equivalent length of the intermediate interval is determined based on the length of the intermediate interval of the PWL in the trained neural network model and the weight quantization parameter and the feature quantization parameter that are of the neural network model; and
adjusting, based on the target scaling coefficient, a parameter of a target network layer in the trained neural network model and the length of the intermediate interval of the PWL in the trained neural network model, to obtain the adjusted neural network model, wherein the target network layer corresponds to the PWL in the trained neural network model.

10. The training method according to claim 9, wherein the determining a target scaling coefficient of the PWL in the trained neural network model based on an equivalent length of the intermediate interval of the PWL in the trained neural network model comprises:
determining the target scaling coefficient based on the equivalent length of the intermediate interval and an integer power of 2 that is closest to the equivalent length of the intermediate interval.

11. A data processing apparatus, comprising:

an obtaining unit, configured to obtain to-be-processed data, wherein the data comprises image data, audio data, or text data; and
a processing unit, configured to process the to-be-processed data by using a target neural network quantization model, wherein the target neural network quantization model comprises a plurality of groups of fusion parameters, the target neural network quantization model is obtained by quantizing a target neural network model, an activation function of the target neural network model comprises a piecewise linear function PWL, the PWL comprises a plurality of intervals, and there is a correspondence between the plurality of groups of fusion parameters and the plurality of intervals.

12. The apparatus according to claim 11, wherein the processing unit is specifically configured to:

determine target indication information based on the to-be-processed data; and
obtain, from the plurality of groups of fusion parameters based on the target indication information, a target fusion parameter corresponding to the target indication information, and process the to-be-processed data based on the target fusion parameter.

13. The apparatus according to claim 12, wherein the processing unit is specifically configured to:

process an input feature of a first network layer based on a weight parameter of the first network layer in the target neural network quantization model, wherein the input feature of the first network layer is determined based on the to-be-processed data; and
determine the target indication information based on a processing result of the first network layer.

14. The apparatus according to claim 13, wherein the weight parameter of the first network layer is obtained by quantizing a weight parameter of a second network layer in the target neural network model, and the second network layer is a network layer that is in the target neural network model and that corresponds to the first network layer; and the processing unit is specifically configured to:

process the processing result of the first network layer based on a fusion bias parameter to obtain a first result; and obtain the target indication information through calculation based on the first result and an equivalent length of an intermediate interval in a plurality of intervals of a PWL corresponding to the second network layer, wherein the equivalent length of the intermediate interval is determined based on a length of the intermediate interval and a quantization parameter of the second network layer.

15. The apparatus according to claim 14, wherein the equivalent length of the intermediate interval is an integer power of 2.

16. A neural network model training apparatus, comprising:

an obtaining unit, configured to obtain a neural network model, wherein an activation function of the neural network model comprises a piecewise linear function PWL, and the PWL comprises a plurality of intervals; and a processing unit, configured to:

train the neural network model based on training data to obtain a target neural network model, wherein the training data comprises image data, audio data, or text data; and process the target neural network model to obtain a target neural network quantization model, wherein the target neural network quantization model comprises a plurality of groups of fusion parameters, and there is a correspondence between the plurality of groups of fusion parameters and the plurality of intervals of the PWL in the target neural network model.

17. The training apparatus according to claim 16, wherein the processing unit is specifically configured to obtain the plurality of groups of fusion parameters based on parameters of the plurality of intervals of the PWL in the target neural network model and a weight quantization parameter and a feature quantization parameter that are of the neural network model, to obtain the target neural network quantization model, wherein the weight quantization parameter and the feature quantization parameter that are of the neural network model are obtained through quantization training.

18. The training apparatus according to claim 16 or 17, wherein the processing unit is specifically configured to:

train the neural network model based on the training data;
adjust a length of an intermediate interval of a PWL in the trained neural network model to obtain an adjusted neural network model; and
obtain the target neural network model based on the adjusted neural network model.

19. The training apparatus according to claim 18, wherein the processing unit is specifically configured to:

determine a target scaling coefficient of the PWL in the trained neural network model based on an equivalent length of the intermediate interval of the PWL in the trained neural network model, wherein the equivalent length of the intermediate interval is determined based on the length of the intermediate interval of the PWL in the trained neural network model and the weight quantization parameter and the feature quantization parameter that are of the neural network model; and
adjust, based on the target scaling coefficient, a parameter of a target network layer in the trained neural network model and the length of the intermediate interval of the PWL in the trained neural network model, to obtain the adjusted neural network model, wherein the target network layer corresponds to the PWL in the trained neural network model.

20. The training apparatus according to claim 19, wherein the processing unit is specifically configured to:
determine the target scaling coefficient based on the equivalent length of the intermediate interval and an integer power of 2 that is closest to the equivalent length of the intermediate interval.

21. A data processing apparatus, comprising a processor and a memory, wherein the memory is configured to store program instructions, and the processor is configured to invoke the program instructions to perform the method according to any one of claims 1 to 5.

22. A neural network model training apparatus, comprising a processor and a memory, wherein the memory is configured to store program instructions, and the processor is configured to invoke the program instructions to perform the method according to any one of claims 6 to 10.

23. A computer-readable storage medium, wherein the computer-readable storage medium stores program code to be executed by a device, and the program code is used to perform the method according to any one of claims 1 to 5 or claims 6 to 10.

24. A computer program product comprising instructions, wherein when the computer program product runs on a computer, the computer is enabled to perform the method according to any one of claims 1 to 5 or claims 6 to 10.

25. A chip, wherein the chip comprises a processor and a data interface, and the processor reads, through the data interface, instructions stored in a memory, to perform the method according to any one of claims 1 to 5 or claims 6 to 10.

FIG. 1

FIG. 2

FIG. 3

Next convolution layer

(a)

Next convolution layer

(b)

FIG. 4

System architecture 100

Data collection
device 160

Data flow

Database
130

Training device
120

Data
flow

Execution device 110

Customer
device
140

Input
data

I/O interface 112

Target model/rule
101

Calculation module 111

Data
storage
system 150

Output
result

FIG. 5

| | Weight memory 502 |
|---|---|

Host CPU

Input memory 501

Operation circuit 503

Vector calculation unit 507

Accumulator 508

Direct memory access controller 505

Unified memory 506

Controller 504

Instruction fetch buffer 509

External memory

Bus interface unit 510

Neural-network processing unit 50

FIG. 6

300

FIG. 7

Execution device 610

Input data → Quantized PWL model → Processing result

Quantize

PWL model

FIG. 8

900

| Obtain a neural network model, where an activation function of the neural network model includes a PWL, and the PWL includes a plurality of intervals | S910 |

| Train the neural network model based on training data to obtain a target neural network model | S920 |

| Process the target neural network model to obtain a target neural network quantization model, where the target neural network quantization model includes a plurality of groups of fusion parameters, and there is a correspondence between the plurality of groups of fusion parameters and the plurality of intervals of the PWL in the target neural network model | S930 |

FIG. 9

1000

Model structure        Training data

Train an initial PWL model based on training data, to obtain a full-precision PWL model — S1010

Perform quantization training on the full-precision PWL model — S1020

Fix quantization parameters — S1030

Train a current model — S1040

Calculate an equivalent length of an intermediate interval — S1050

Calculate an integer power of 2 that is closest to the equivalent length of the intermediate interval, and calculate a first scaling coefficient — S1060

Constrain the first scaling coefficient to obtain a target scaling coefficient — S1070

Perform scaling processing on a parameter of a target network layer — S1080

Perform scaling processing on a boundary of the PWL — S1090

Whether a target quantity of iterations is reached

No

Yes

Target neural network model and quantization parameter

FIG. 10

Convolution weight $W$

Quantization operation

$$\bar{W} = round\left(\frac{W}{S_W}\right)$$

Input feature $X$

Quantization operation

$$\bar{X} = round\left(\frac{X-\beta}{S_X}\right)$$

Convolution operation

$$\bar{Y} = \bar{X} * \bar{W}$$

Dequantization operation and bias addition operation

$$\hat{Y} = \bar{Y} * S_W * S_X + \bar{W} * S_W * \beta + b$$

Quantization operation

$$\bar{Z} = round\left(\frac{Z-\gamma}{S_z}\right)$$

Calculation of a PWL activation function

$$Z = (\hat{Y} - B_i) * K_i + P_i$$

FIG. 11

1200

Obtain to-be-processed data, where the to-be-processed data includes image data, audio data, or text data ⟶ S1210

Process the to-be-processed data by using a target neural network quantization model, where the target neural network quantization model includes a plurality of groups of fusion parameters, the target neural network quantization model is obtained by quantizing a target neural network model, an activation function of the target neural network model includes a PWL, the PWL includes a plurality of intervals, and there is a correspondence between the plurality of groups of fusion parameters and the plurality of intervals ⟶ S1220

FIG. 12

(a)

(b)

FIG. 13

Training apparatus 3000

Obtaining unit 3010

Processing unit 3020

FIG. 14

Data processing apparatus 4000

Obtaining unit 4010

Processing unit 4020

FIG. 15

Training apparatus 5000

Memory 5001

Processor 5002

Bus 5004

Communication interface 5003

FIG. 16

Data processing apparatus 6000

Memory 6001

Processor 6002

Bus 6004

Communication interface 6003

FIG. 17

## INTERNATIONAL SEARCH REPORT

| International application No. |
| --- |
| **PCT/CN2022/103691** |

**A. CLASSIFICATION OF SUBJECT MATTER**

G06K 9/00(2022.01)i;  G06K 9/62(2022.01)i;  G06N 3/04(2006.01)i;  G06N 3/063(2006.01)i

According to International Patent Classification (IPC) or to both national classification and IPC

**B. FIELDS SEARCHED**

Minimum documentation searched (classification system followed by classification symbols)

G06K G06N

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; WOTXT; EPTXT: 神经网络, 量化, 模型, 分段, 线性, 激活, 函数, PWL, nerve network, quantify, model, segmentation, fraction, linear, activation, function

**C. DOCUMENTS CONSIDERED TO BE RELEVANT**

| Category* | Citation of document, with indication, where appropriate, of the relevant passages | Relevant to claim No. |
| --- | --- | --- |
| A | CN 111047007 A (BEIJING ZHONGKE SHENGXIN TECHNOLOGY CO., LTD.) 21 April 2020 (2020-04-21)<br>description, paragraphs [0002]-[0053] | 1-25 |
| A | CN 111382860 A (NANJING UNIVERSITY OF AERONAUTICS AND ASTRONAUTICS) 07 July 2020 (2020-07-07)<br>entire document | 1-25 |
| A | CN 111507465 A (UNIVERSITY OF ELECTRONIC SCIENCE AND TECHNOLOGY OF CHINA) 07 August 2020 (2020-08-07)<br>entire document | 1-25 |
| A | CN 112785597 A (SAMSUNG ELECTRONICS CO., LTD.) 11 May 2021 (2021-05-11)<br>entire document | 1-25 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 August 2022** | **24 August 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/103691**

| Patent document cited in search report | | | Publication date (day/month/year) | Patent family member(s) | | | Publication date (day/month/year) |
|---|---|---|---|---|---|---|---|
| CN | 111047007 | A | 21 April 2020 | CN | 111047007 | B | 30 July 2021 |
| CN | 111382860 | A | 07 July 2020 | None | | | |
| CN | 111507465 | A | 07 August 2020 | CN | 111507465 | B | 23 October 2020 |
| CN | 112785597 | A | 11 May 2021 | EP | 3816874 | A2 | 05 May 2021 |
| | | | | JP | 2021072103 | A | 06 May 2021 |
| | | | | US | 2021133278 | A1 | 06 May 2021 |
| | | | | KR | 20210053160 | A | 11 May 2021 |
| | | | | TW | 202119293 | A | 16 May 2021 |
| | | | | EP | 3816874 | A3 | 21 July 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202110771795